# EUROPEAN PATENT APPLICATION

(11) **EP 4 418 716 A1**
(43) Date of publication of application: **21.08.2024**
(21) Application number: 22897830.0
(22) Date of filing: 23.11.2022
(51) Int. Cl.: H04W 24/02

(54) **COMMUNICATION METHOD AND APPARATUS**

(30) Priority: 25.11.2021 CN 202111417500
(71) Applicant: Huawei Technologies Co., Ltd., Shenzhen, Guangdong 518129 (CN)
(72) Inventor: HU, Mengshi, Shenzhen, Guangdong 518129 (CN); LI, Yifei, Chengdu, Sichuan 611756 (CN); LONG, Yan, Chengdu, Sichuan 611756 (CN); HE, Rong, Chengdu, Sichuan 611756 (CN); FANG, Xuming, Chengdu, Sichuan 611756 (CN); LI, Yunbo, Shenzhen, Guangdong 518129 (CN); HAN, Xiao, Shenzhen, Guangdong 518129 (CN); DU, Rui, Shenzhen, Guangdong 518129 (CN); LV, Yi, Shenzhen, Guangdong 518129 (CN); YANG, Xun, Shenzhen, Guangdong 518129 (CN)
(74) Representative: Goddar, Heinz J.
(86) International application number: PCT/CN2022/133631
(87) International publication number: WO 2023/093747

(57) **Abstract**

This application provides a communication method and an apparatus, to implement a channel sensing procedure between different apparatuses while meeting a communication requirement, thereby improving communication efficiency of a WLAN system and reducing overheads. In the method, a first apparatus sends a first frame to a second apparatus, where the first frame is used to request channel sensing; and the first apparatus receives a second frame from the second apparatus, where the second frame includes channel sensing information between the first apparatus and the second apparatus, the channel sensing information is determined based on a part of or all of n PPDUs, the n PPDUs are PPDUs sent by the first apparatus, and n is greater than or equal to 1.

## Description

This application claims priority to Chinese Patent Application No.202111417500.1, filed with the China National Intellectual Property Administration on November 25, 2021 and entitled "COMMUNICATION METHOD AND APPARATUS", which is incorporated herein by reference in its entirety.

### TECHNICAL FIELD

This application relates to the field of wireless local area network (wireless local area network, WLAN) technologies, and in particular, to a communication method and an apparatus.

### BACKGROUND

In WLAN communication, with wide deployment of WLAN devices and an increase of sensing (Sensing) requirements, to perform sensing through a radio signal transmitted by a WLAN device that is generally easily obtained is a hot topic in current research.

A signal sent by the WLAN device is usually received after being reflected, diffracted, and scattered by various obstacles. As a result, an actually received signal is usually obtained by superimposing multiple signals, and this causes interference to communication. However, from another perspective, this also brings convenience for sensing, through a radio signal, a physical environment that the radio signal passes through. The radio signal affected by various obstacles is analyzed, and a peripheral environment of the WLAN device can be inferred or sensed.

However, in WLAN communication, how to perform sensing through a transmitted signal is an urgent technical problem to be resolved.

### SUMMARY

This application provides a communication method and an apparatus, to implement a channel sensing procedure between different apparatuses while meeting a communication requirement, thereby improving communication efficiency of a WLAN system and reducing overheads.

A first aspect of this application provides a communication method, applied to a WLAN system. The method is performed by a WLAN device, or the method is performed by some components in a WLAN device. The WLAN device may include a station (station, STA) or an access point (access point, AP), and the some components in the WLAN device may include a processor, a chip, a chip system, or the like. In the first aspect and the possible implementations of the first aspect, descriptions are provided by using an example in which a first apparatus is the WLAN device for performing the method. In the method, the first apparatus sends a first frame to a second apparatus, where the first frame is used to request channel sensing; and the first apparatus receives a second frame from the second apparatus, where the second frame includes channel sensing information between the first apparatus and the second apparatus, the channel sensing information is determined based on a part of or all of n (physical layer protocol data units PPDUs), the n PPDUs are PPDUs sent by the first apparatus, and n is greater than or equal to 1.

It should be noted that, in embodiments of this application, channel sensing information between the first apparatus and the second apparatus may alternatively be expressed as (peripheral/physical) environment sensing information between the first apparatus and the second apparatus, may be expressed as sensing information between the first apparatus and the second apparatus, may be expressed as sensing measurement information between the first apparatus and the second apparatus, or may be expressed as sensing feedback information between the first apparatus and the second apparatus.

In addition, in embodiments of this application, that the n PPDUs are PPDUs sent by the first apparatus includes that the n PPDUs are PPDUs sent by the first apparatus to another apparatus. The another apparatus may include the second apparatus and/or an apparatus (for example, a third apparatus mentioned below) different from the second apparatus. This is not limited herein.

Based on the foregoing technical solutions, after the first apparatus sends, to the second apparatus, the first frame used to request channel sensing, the second apparatus can perform channel sensing based on the n PPDUs sent by the first apparatus, and determine the channel sensing information transmitted between the first apparatus and the second apparatus for the part of or all of the n PPDUs. Then, the first apparatus receives the second frame including the channel sensing information from the second apparatus, and implements a channel sensing procedure. Therefore, based on the n PPDUs sent by the first apparatus, a channel sensing procedure between different apparatuses can be implemented while the communication requirement of the first apparatus is met, thereby improving communication efficiency of the WLAN system and reducing overheads.

A second aspect of this application provides a communication method, applied to a WLAN system. The method is performed by a WLAN device, or the method is performed by some components in a WLAN device. The WLAN device may include a STA or an AP, and the some components in the WLAN device may include a processor, a chip, a chip system, or the like. In the second aspect and the possible implementations of the second aspect, descriptions are provided by using an example in which a second apparatus is the WLAN device for performing the method. In the method, the second apparatus receives a first frame from a first apparatus, where the first frame is used to request channel sensing; and the second apparatus sends a second frame to the first apparatus, where the second frame includes channel sensing information between the first apparatus and the second apparatus, the channel sensing information is determined based on a part of or all of n PPDUs, the n PPDUs are PPDUs sent by the first apparatus, and n is greater than or equal to 1.

Based on the foregoing technical solutions, after the second apparatus receives, from the second apparatus, the first frame used to request channel sensing, the second apparatus can perform channel sensing based on the n PPDUs sent by the first apparatus, and determine the channel sensing information transmitted between the first apparatus and the second apparatus for the part of or all of the n PPDUs. Then, the second apparatus sends the second frame including the channel sensing information to the first apparatus, and implements a channel sensing procedure. Therefore, based on the n PPDUs sent by the first apparatus, a channel sensing procedure between different apparatuses can be implemented while the communication requirement of the first apparatus is met, thereby improving communication efficiency of the WLAN system and reducing overheads.

In a possible implementation of the first aspect or the second aspect, at least one of the n PPDUs is used for communication between the first apparatus and a third apparatus.

It should be noted that, that at least one of the n PPDUs is used for communication between the first apparatus and a third apparatus includes that at least one of the n PPDUs is used for at least one communication process such as data exchange, signaling transmission, or sensing (for example, sensing session setup, measurement setup, measurement instance, measurement setup termination, and sensing session termination) between the first apparatus and a third apparatus.

Based on the foregoing technical solutions, the channel sensing information between the first apparatus and the second apparatus is determined based on the part of or all of the n PPDUs. Because the second apparatus is different from the third apparatus and the at least one of the n PPDUs is used for communication between the first apparatus and the third apparatus, a PPDU used for communication by another apparatus is reused in a process of determining the channel sensing information between the first apparatus and the second apparatus. Therefore, the channel sensing procedure between the first apparatus and the second apparatus can be implemented while communication requirements of the first apparatus and the third apparatus are met, thereby improving communication efficiency of the WLAN system and reducing overheads.

In a possible implementation of the first aspect or the second aspect, the channel sensing information includes at least one of the following: channel state information (channel state information, CSI), a multiple input multiple output (multiple input multiple output, MIMO) parameter of CSI, an identifier of a PPDU corresponding to CSI, or address information of the part of or all of the PPDUs.

Based on the foregoing technical solutions, the channel sensing information between the first apparatus and the second apparatus included in the second frame sent by the second apparatus can specifically include at least one piece of the foregoing information, so as to indicate, to the first apparatus, one or more types of information corresponding to the channel sensing information.

For example, CSI included in the channel sensing information may indicate a channel status of a channel between the first apparatus and the second apparatus, so that the first apparatus knows the channel status. A MIMO parameter of CSI included in the channel sensing information may indicate a MIMO parameter of a signal transmitted between the first apparatus and the second apparatus, so that the first apparatus knows the MIMO parameter of the signal. An identifier of a PPDU corresponding to CSI included in the channel sensing information may indicate a PPDU corresponding to CSI included in the channel sensing information, so that the first apparatus knows the PPDU corresponding to the CSI. Address information of the part of or all of the PPDUs included in the channel sensing information may indicate that the channel sensing information is determined based on a PPDU corresponding to the address information, so that the first apparatus knows that the channel sensing information is determined based on the PPDU corresponding to the address information.

In a possible implementation of the first aspect or the second aspect, the part of or all of the PPDUs include m PPDUs, m is greater than or equal to 1, and m is less than or equal to n; and
the m PPDUs included in the part of or all of the PPDUs are respectively located in m PPDU sets of the n PPDUs, the m PPDU sets include a first PPDU set and a second PPDU set that are adjacent to each other, and change information between CSI corresponding to a PPDU in the first PPDU set and CSI corresponding to a PPDU in the second PPDU set is greater than a first threshold.

Based on the foregoing technical solutions, the channel sensing information included in the second frame is determined based on the m PPDUs. In other words, the second frame includes channel sensing information corresponding to the m PPDUs. The m PPDUs are respectively located in the m PPDU sets of the n PPDUs, and for the first PPDU set and the second PPDU set that are adjacent to each other in the m PPDU sets, the change information between the CSI corresponding to the PPDU in the first PPDU set and the CSI corresponding to the PPDU in the second PPDU set is greater than the first threshold. In other words, in the m PPDU sets of the n PPDUs, CSI corresponding to PPDUs included in adjacent PPDU sets changes greatly. Therefore, the channel sensing information included in the second frame corresponds to PPDUs in the adjacent PPDU sets whose CSI changes greatly, so that a receiver of the second frame can know a difference between different channel sensing information included in the second frame.

In addition, when m is less than n, the second apparatus does not need to feed back channel sensing information corresponding to all PPDUs in the n PPDUs. This saves overheads.

Optionally, that the m PPDUs included in the part of or all of the PPDUs are respectively located in m PPDU sets of the n PPDUs includes that the m PPDUs included in the part of or all of the PPDUs are respectively first PPDUs in m PPDU sets of the n PPDUs.

Optionally, that the m PPDUs included in the part of or all of the PPDUs are respectively located in m PPDU sets of the n PPDUs includes that the m PPDUs included in the part of or all of the PPDUs are respectively last PPDUs in m PPDU sets of the n PPDUs.

In a possible implementation of the first aspect or the second aspect, that change information between CSI corresponding to a PPDU in the first PPDU set and CSI corresponding to a PPDU in the second PPDU set is greater than a first threshold includes:
change information between CSI corresponding to any PPDU in the first PPDU set and CSI corresponding to any PPDU in the second PPDU set is greater than the first threshold; or
change information between CSI corresponding to one PPDU in the first PPDU set and CSI corresponding to one PPDU in the second PPDU set is greater than the first threshold.

In a possible implementation of the first aspect or the second aspect, change information between CSI corresponding to at least two PPDUs included in the first PPDU set is less than a second threshold.

Based on the foregoing technical solutions, the channel sensing information included in the second frame is determined based on the m PPDUs. In other words, the second frame includes channel sensing information corresponding to the m PPDUs. The m PPDUs are respectively located in the m PPDU sets of the n PPDUs, and for any PPDU set (for example, the first PPDU set) of the m PPDU sets, when the PPDU set includes at least two PPDUs, change information between CSI corresponding to the at least two PPDUs is less than the second threshold. In other words, the channel sensing information included in the second frame corresponds to PPDUs in adjacent PPDU sets whose CSI changes greater. Therefore, the second apparatus does not need to feed back channel sensing information corresponding to all PPDUs included in each of the m PPDU sets, thereby saving overheads.

It should be noted that, in embodiments of this application, an association relationship between the first threshold and the second threshold is not limited. For example, the first threshold may be equal to the second threshold, or the first threshold may be greater than the second threshold.

Optionally, in at least two PPDUs included in the first PPDU set, change information between CSI corresponding to two adjacent PPDUs is less than a second threshold.

Optionally, change information between CSI corresponding to at least two PPDUs included in the second PPDU set is less than a second threshold.

Optionally, in at least two PPDUs included in the second PPDU set, change information between CSI corresponding to two adjacent PPDUs is less than a second threshold.

Optionally, change information between CSI corresponding to at least two PPDUs included in any PPDU set of the m PPDU sets is less than a second threshold.

Optionally, in at least two PPDUs included in any PPDU set of the m PPDU sets, change information between CSI corresponding to two adjacent PPDUs is less than a second threshold.

In a possible implementation of the first aspect or the second aspect, the n PPDUs meet at least one of the following:
a receiver address (receiver address, RA) field of the at least one of the n PPDUs indicates the third apparatus;
a receiver address field of the at least one of the n PPDUs indicates the second apparatus; or
the at least one of the n PPDUs is a PPDU sent through broadcast.

Optionally, that a receiver address field of the at least one of the n PPDUs indicates the third apparatus may indicate that the at least one of the n PPDUs is used for communication between the first apparatus and the third apparatus. In other words, that a receiver address field of the at least one of the n PPDUs indicates the third apparatus includes that the at least one of the n PPDUs is used for at least one communication process such as data exchange, signaling transmission, or sensing (for example, sensing session setup, measurement setup, measurement instance, measurement setup termination, and sensing session termination) between the first apparatus and the third apparatus.

Optionally, that a receiver address field of the at least one of the n PPDUs indicates the second apparatus may indicate that the at least one of the n PPDUs is used for communication between the first apparatus and the second apparatus. In other words, that a receiver address field of the at least one of the n PPDUs indicates the second apparatus includes that the at least one of the n PPDUs is used for at least one communication process such as data exchange, signaling transmission, or sensing (for example, sensing session setup, measurement setup, measurement instance, measurement setup termination, and sensing session termination) between the first apparatus and the second apparatus.

Optionally, that the at least one of the n PPDUs is a PPDU sent through broadcast may indicate that the at least one of the n PPDUs is used for communication between the first apparatus and at least two apparatuses. In other words, that the at least one of the n PPDUs is a PPDU sent through broadcast includes that the at least one of the n PPDUs is used for at least one communication process such as data exchange, signaling transmission, or sensing (for example, sensing session setup, measurement setup, measurement instance, measurement setup termination, and sensing session termination) between the first apparatus and at least two apparatuses.

Based on the foregoing technical solutions, the channel sensing information between the first apparatus and the second apparatus is determined based on the part of or all of the n PPDUs. Because a receiver address field of the at least one of the n PPDUs indicates the third apparatus, that is, the at least one of the n PPDUs is used for communication between the first apparatus and the third apparatus (or a receiver address field of the at least one of the n PPDUs indicates the second apparatus, that is, the at least one of the n PPDUs is used for communication between the first apparatus and the second apparatus; or the at least one of the n PPDUs is a PPDU sent through broadcast, that is, is used for broadcast communication of the first apparatus), a PPDU used for communication is reused in a process of determining the channel sensing information between the first apparatus and the second apparatus. Therefore, the channel sensing procedure between the first apparatus and the second apparatus can be implemented while the communication requirement of the first apparatus is met, thereby improving communication efficiency of the WLAN system and reducing overheads.

In a possible implementation of the first aspect or the second aspect, the first frame includes at least one of the following: start moment information of channel sensing, duration information of channel sensing, frequency band information of channel sensing, indication information indicating whether to feed back a change of CSI, or address information of a PPDU for channel sensing.

Based on the foregoing technical solutions, the first frame used to request channel sensing sent by the first apparatus can include at least one piece of the foregoing information, so as to indicate one or more types of information corresponding to requested channel sensing to the first apparatus.

For example, start moment information of channel sensing included in the first frame indicates a start moment of channel sensing, so that the second apparatus knows when to start performing channel sensing. Duration information of channel sensing included in the first frame indicates duration of channel sensing, so that the second apparatus knows duration of performing the channel sensing. Frequency band information of channel sensing included in the first frame indicates a frequency band for channel sensing, so that the second apparatus knows a frequency band of a PPDU used for channel sensing. Indication information, indicating whether to feed back a change of CSI, included in the first frame is used to enable the second apparatus to know duration of performing channel sensing. Address information of a PPDU for channel sensing included in the first frame indicates address information of a PPDU used for channel sensing, so that the second apparatus knows the address information of the PPDU used for channel sensing thereby avoiding confusion.

In the communication method in the first aspect, the first apparatus may be configured to perform a process in one or more of the following implementations.

In a possible implementation of the first aspect, before the first apparatus receives the second frame from the second apparatus, the method further includes: The first apparatus receives a response frame of the first frame from the second apparatus, where the response frame of the first frame indicates whether the second apparatus agrees to channel sensing; or the response frame of the first frame indicates whether the second apparatus receives the first frame.

Based on the foregoing technical solutions, after the first apparatus sends, to the second apparatus, the first frame used to request channel sensing, the second apparatus can send, based on the first frame, the response frame of the first frame to the first apparatus, so that the first apparatus knows, based on the response frame of the first frame, whether the first apparatus agrees to channel sensing (or knows whether the first apparatus receives the first frame).

In a possible implementation of the first aspect, both the first frame and the response frame of the first frame are management frames; and a value of a subtype field in a frame control field in the first frame is 0111, and a value of a subtype field in the response frame of the first frame is 1111; or a value of a subtype field in a frame control field in the first frame is 1111, and a value of a subtype field in the response frame of the first frame is 0111.

In a possible implementation of the first aspect,
both the first frame and the response frame of the first frame are action frames; and
a value of a public action field in the first frame is any one of 34 to 255, and a value of a public action field in the response frame of the first frame is any one of 34 to 255.

In a possible implementation of the first aspect, after the first apparatus sends a first frame to a second apparatus, the method further includes: The first apparatus receives a third frame from the second apparatus, where the third frame includes channel change information between the first apparatus and the second apparatus, and the channel change information is determined based on the n PPDUs.

Based on the foregoing technical solutions, after the first apparatus sends, to the second apparatus, the first frame used to request channel sensing, the first apparatus receives, from the second apparatus, the third frame including the channel change information between the first apparatus and the second apparatus, so that the first apparatus knows a change of a channel between the first apparatus and the second apparatus.

Optionally, the first apparatus may determine, based on the channel change information included in the third frame, a change of an environment between the first apparatus and the second apparatus, for example, movement of an object between the first apparatus and the second apparatus, or a gesture motion of a user between the first apparatus and the second apparatus.

Optionally, when the channel change information included in the third frame indicates that the channel between the first apparatus and the second apparatus does not change (or the change is less than a third threshold), the first apparatus does not need to receive the second frame. In other words, the second apparatus does not need to send the second frame.

Optionally, the channel change information and the channel sensing information may be carried in a same frame. For example, both the channel change information and the channel sensing information are carried in a second frame, or both the channel change information and the channel sensing information are carried in a third frame.

In a possible implementation of the first aspect, before the first apparatus receives a third frame from the second apparatus, the method further includes: The first apparatus sends a first trigger frame to the second apparatus, where the first trigger frame includes resource unit (resource unit, RU) information carrying channel change information, and the RU information carrying the channel change information indicates an RU corresponding to the second apparatus, or the RU information carrying the channel change information indicates an RU for random access.

In a possible implementation of the first aspect, the third frame is carried in an RU for contention-based channel access.

Based on the foregoing technical solutions, the first apparatus (and/or the second apparatus) can determine, in a plurality of manners, the RU carrying the third frame. For example, the first apparatus (and/or the second apparatus) can determine, based on an indication of the first trigger frame, the RU carrying the third frame, so that the first apparatus and the second apparatus receive and send the third frame on the specified RU. For another example, the first apparatus (and/or the second apparatus) can use the RU used for random access as the RU carrying the third frame. This saves overheads, without an indication from the first apparatus, and the second apparatus can alternatively determine an occasion for sending the third frame (for example, sending the third frame only when the change indicated by the channel change information is large), thereby further saving overheads.

In a possible implementation of the first aspect, the third frame further includes at least one of the following: location change information of the second apparatus, or address information of the part of or all of the n PPDUs.

Based on the foregoing technical solutions, the third frame including the channel change information between the first apparatus and the second apparatus can further include at least one piece of the foregoing information, so that the first apparatus knows, based on the third frame sent by the second apparatus, channel change related information.

For example, because a location change of the second apparatus may also cause the change of the channel between the first apparatus and the second apparatus, the location change information of the second apparatus included in the third frame indicates the location change of the second apparatus, so that the first apparatus knows the location change of the second apparatus, and further knows, based on the location change, whether the channel between the first apparatus and the second apparatus changes and a cause of the change of the channel. Address information of the part of or all of the n PPDUs included in the third frame indicates address information of a PPDU corresponding to the channel change information, so that the second apparatus knows the address information of the PPDU corresponding to the channel change information, thereby avoiding confusion.

In a possible implementation of the first aspect, before the first apparatus receives a second frame from the second apparatus, the method further includes: The first apparatus sends a second trigger frame to the second apparatus, where the second trigger frame includes RU information carrying channel sensing information, and the RU information carrying the channel sensing information indicates an RU corresponding to the second apparatus, or the RU information carrying the channel sensing information indicates an RU for contention access.

In a possible implementation of the first aspect, the second frame is carried in an RU for contention-based channel access.

Based on the foregoing technical solutions, the first apparatus (and/or the second apparatus) can determine, in a plurality of manners, the RU carrying the second frame. For example, the first apparatus (and/or the second apparatus) can determine, based on an indication of the second trigger frame, the RU carrying the second frame, so that the first apparatus and the second apparatus receive and send the second frame on the specified RU. For another example, the first apparatus (and/or the second apparatus) can use the RU used for random access as the RU carrying the second frame. This saves overheads, without an indication from the first apparatus, and the second apparatus can alternatively determine an occasion for sending the second frame (for example, sending the second frame only when a data amount corresponding to the channel sensing information reaches a threshold), thereby further saving overheads.

In a possible implementation of the first aspect, before the first apparatus receives a second frame from the second apparatus, the method further includes: The first apparatus sends a fourth frame to the second apparatus, where the fourth frame includes at least one of the following fields:
a first field, indicating whether beamforming or precoding exists,
a second field, indicating whether to change a transmit power,
a third field, indicating whether to change beamforming-precoding,
a fourth field, indicating a beamforming matrix-a precoding matrix,
a fifth field, indicating whether a transmit power changes, or
a sixth field, indicating a transmit power value.

Based on the foregoing technical solutions, because a change of a transmit parameter of the first apparatus can also cause the change of the channel between the first apparatus and the second apparatus, information included in the fourth frame indicates the parameter change, so that the second apparatus knows the parameter change of the first apparatus, and further knows, based on the parameter change, whether the channel between the first apparatus and the second apparatus changes and a cause of the change of the channel.

Optionally, before the first apparatus receives a second frame from the second apparatus, the method further includes: The first apparatus sends a fourth frame to the second apparatus, where the fourth frame includes change information of a transmit parameter of the first apparatus.

Optionally, the change information of the transmit parameter of the first apparatus includes at least one of the first field, the second field, the third field, and the fourth field.

Optionally, in a process in which the first apparatus sends the n PPDUs, the transmit parameter is not changed.

In the communication method in the second aspect, the second apparatus may be configured to perform a process in one or more of the following implementations.

In a possible implementation of the second aspect, before the second apparatus sends a second frame to the first apparatus, the method further includes: The second apparatus sends a response frame of the first frame to the first apparatus, where the response frame of the first frame indicates whether the second apparatus agrees to channel sensing; or the response frame of the first frame indicates whether the second apparatus receives the first frame.

Based on the foregoing technical solutions, after the second apparatus receives, from the first apparatus, the first frame used to request channel sensing, the second apparatus can send, based on the first frame, the response frame of the first frame to the first apparatus, so that the first apparatus knows, based on the response frame of the first frame, whether the first apparatus agrees to channel sensing (or knows whether the first apparatus receives the first frame).

In a possible implementation of the second aspect,
both the first frame and the response frame of the first frame are management frames; and
a value of a subtype field in a frame control field in the first frame is 0111, and a value of a subtype field in the response frame of the first frame is 1111; or
a value of a subtype field in a frame control field in the first frame is 1111, and a value of a subtype field in the response frame of the first frame is 0111.

In a possible implementation of the second aspect,
both the first frame and the response frame of the first frame are action frames; and
a value of a public action field in the first frame is any one of 34 to 255, and a value of a public action field in the response frame of the first frame is any one of 34 to 255.

In a possible implementation of the second aspect, after the second apparatus receives a first frame from the second apparatus, the method further includes: The second apparatus sends a third frame to the second apparatus, where the third frame includes channel change information between the first apparatus and the second apparatus, and the channel change information is determined based on the n PPDUs.

Based on the foregoing technical solutions, after the second apparatus receives, from the first apparatus, the first frame used to request channel sensing, the second apparatus sends the third frame including the channel change information between the first apparatus and the second apparatus to the first apparatus, so that the first apparatus knows a change of a channel between the first apparatus and the second apparatus.

Optionally, when the channel change information included in the third frame indicates that a channel between the first apparatus and the second apparatus does not change (or the change is less than a third threshold), the first apparatus may not need to receive the second frame. In other words, the second apparatus may not need to send the second frame.

Optionally, the channel change information and the channel sensing information may be carried in a same frame. For example, both the channel change information and the channel sensing information are carried in a second frame, or both the channel change information and the channel sensing information are carried in a third frame.

In a possible implementation of the second aspect, before the second apparatus sends a third frame to the second apparatus, the method further includes: The second apparatus receives a first trigger frame from the first apparatus, where the first trigger frame includes resource unit RU information carrying the channel change information, and the RU information carrying the channel change information indicates an RU corresponding to the second apparatus, or the RU information carrying the channel change information indicates an RU for random access.

In a possible implementation of the second aspect, the third frame is carried in an RU for contention-based channel access.

Based on the foregoing technical solutions, the first apparatus (and/or the second apparatus) can determine, in a plurality of manners, the RU carrying the third frame. For example, the first apparatus (and/or the second apparatus) can determine, based on an indication of the first trigger frame, the RU carrying the third frame, so that the first apparatus and the second apparatus receive and send the third frame on the specified RU. For another example, the first apparatus (and/or the second apparatus) can use the RU used for random access as the RU carrying the third frame. This saves overheads, without an indication from the first apparatus, and the second apparatus can alternatively determine an occasion for sending the third frame (for example, sending the third frame only when the change indicated by the channel change information is large), thereby further saving overheads.

In a possible implementation of the second aspect, the third frame further includes at least one of the following: location change information of the second apparatus, or address information of the part of or all of the n PPDUs.

Based on the foregoing technical solutions, the third frame including the channel change information between the first apparatus and the second apparatus can further include at least one piece of the foregoing information, so that the first apparatus knows, based on the third frame sent by the second apparatus, channel change related information.

For example, because a location change of the second apparatus may also cause the change of the channel between the first apparatus and the second apparatus, the location change information of the second apparatus included in the third frame indicates the location change of the second apparatus, so that the first apparatus knows the location change of the second apparatus, and further knows, based on the location change, whether the channel between the first apparatus and the second apparatus changes and a cause of the change of the channel. Address information of the part of or all of the n PPDUs included in the third frame indicates address information of a PPDU corresponding to the channel change information, so that the second apparatus knows the address information of the PPDU corresponding to the channel change information, thereby avoiding confusion.

In a possible implementation of the second aspect, before the second apparatus sends a second frame to the first apparatus, the method further includes: The second apparatus receives a second trigger frame from the first apparatus, where the second trigger frame includes RU information carrying channel sensing information, and the RU information carrying the channel sensing information indicates an RU corresponding to the second apparatus, or the RU information carrying the channel sensing information indicates an RU for contention access.

In a possible implementation of the second aspect, the second frame is carried in an RU for contention-based channel access.

Based on the foregoing technical solutions, the first apparatus (and/or the second apparatus) can determine, in a plurality of manners, the RU carrying the second frame. For example, the first apparatus (and/or the second apparatus) can determine, based on an indication of the second trigger frame, the RU carrying the second frame, so that the first apparatus and the second apparatus receive and send the second frame on the specified RU. For another example, the first apparatus (and/or the second apparatus) can use the RU used for random access as the RU carrying the second frame. This saves overheads, without an indication from the first apparatus, and the second apparatus can alternatively determine an occasion for sending the second frame (for example, sending the second frame only when a data amount corresponding to the channel sensing information reaches a threshold), thereby further saving overheads.

In a possible implementation of the second aspect, before the second apparatus sends a second frame to the first apparatus, the method further includes: The second apparatus receives a fourth frame from the first apparatus, where the fourth frame includes at least one of the following fields:
a first field, indicating whether beamforming or precoding exists,
a second field, indicating whether to change a transmit power,
a third field, indicating whether to change beamforming-precoding,
a fourth field, indicating a beamforming matrix-a precoding matrix,
a fifth field, indicating whether a transmit power changes, or
a sixth field, indicating a transmit power value.

Based on the foregoing technical solutions, because a change of a transmit parameter of the first apparatus can also cause the change of the channel between the first apparatus and the second apparatus, information included in the fourth frame indicates the parameter change, so that the second apparatus knows the parameter change of the first apparatus, and further knows, based on the parameter change, whether the channel between the first apparatus and the second apparatus changes and a cause of the change of the channel.

Optionally, before the first apparatus receives a second frame from the second apparatus, the method further includes: The first apparatus sends a fourth frame to the second apparatus, where the fourth frame includes change information of a transmit parameter of the first apparatus.

Optionally, the change information of the transmit parameter of the first apparatus includes at least one of the first field, the second field, the third field, and the fourth field.

Optionally, in a process in which the first apparatus sends the n PPDUs, the transmit parameter is not changed.

A third aspect of this application provides an apparatus, used in a WLAN system. The apparatus may be a WLAN device, or the apparatus may be some components in a WLAN device. The WLAN device may include a STA or an AP, and the some components in the WLAN device may include a processor, a chip, a chip system, or the like. In the third aspect and the possible implementations of the third aspect, descriptions are provided by using an example in which a first apparatus is the WLAN device.

The apparatus includes a sending unit and a receiving unit.

The sending unit is configured to send a first frame to a second apparatus, where the first frame is used to request channel sensing.

The receiving unit is configured to receive a second frame from the second apparatus, where the second frame includes channel sensing information between the first apparatus and the second apparatus, the channel sensing information is determined based on a part of or all of n PPDUs, the n PPDUs are PPDUs sent by the first apparatus, and n is greater than or equal to 1.

A fourth aspect of this application provides an apparatus, used in a WLAN system. The apparatus may be a WLAN device, or the apparatus may be some components in a WLAN device. The WLAN device may include a STA or an AP, and the some components in the WLAN device may include a processor, a chip, a chip system, or the like. In the fourth aspect and the possible implementations of the fourth aspect, descriptions are provided by using an example in which a second apparatus is the WLAN device.

The apparatus includes a sending unit and a receiving unit.

The receiving unit is configured to receive a first frame from a first apparatus, where the first frame is used to request channel sensing.

The sending unit is configured to send a second frame to the first apparatus, where the second frame includes channel sensing information between the first apparatus and the second apparatus, the channel sensing information is determined based on a part of or all of n PPDUs, the n PPDUs are PPDUs sent by the first apparatus, and n is greater than or equal to 1.

In a possible implementation of the third aspect or the fourth aspect, at least one of the n PPDUs is used for communication between the first apparatus and a third apparatus.

In a possible implementation of the third aspect or the fourth aspect, the channel sensing information includes at least one of the following:
channel state information CSI, a multiple input multiple output MIMO parameter of CSI, an identifier of a PPDU corresponding to CSI, or address information of the part of or all of the PPDUs.

In a possible implementation of the third aspect or the fourth aspect,
the part of or all of the PPDUs include m PPDUs, m is greater than or equal to 1, and m is less than or equal to n; and
the m PPDUs included in the part of or all of the PPDUs are respectively located in m PPDU sets of the n PPDUs, the m PPDU sets include a first PPDU set and a second PPDU set that are adjacent to each other, and change information between CSI corresponding to a PPDU in the first PPDU set and CSI corresponding to a PPDU in the second PPDU set is greater than a first threshold.

In a possible implementation of the third aspect or the fourth aspect, that change information between CSI corresponding to a PPDU in the first PPDU set and CSI corresponding to a PPDU in the second PPDU set is greater than a first threshold includes:
change information between CSI corresponding to any PPDU in the first PPDU set and CSI corresponding to any PPDU in the second PPDU set is greater than the first threshold; or
change information between CSI corresponding to one PPDU in the first PPDU set and CSI corresponding to one PPDU in the second PPDU set is greater than the first threshold.

In a possible implementation of the third aspect or the fourth aspect,
change information between CSI corresponding to at least two PPDUs included in the first PPDU set is less than a second threshold.

In a possible implementation of the third aspect or the fourth aspect, the n PPDUs meet at least one of the following:
a receiver address field of the at least one of the n PPDUs indicates the third apparatus;
a receiver address field of the at least one of the n PPDUs indicates the second apparatus; or
the at least one of the n PPDUs is a PPDU sent through broadcast.

In a possible implementation of the third aspect or the fourth aspect, the first frame includes at least one of the following:
start moment information of channel sensing, duration information of channel sensing, frequency band information of channel sensing, indication information indicating whether to feed back a change of CSI, or address information of a PPDU for channel sensing.

In a communication process in the third aspect, the first apparatus may be configured to perform a communication process in one or more of the following implementations.

In a possible implementation of the third aspect,
the receiving unit is further configured to receive a response frame of the first frame from the second apparatus, where
the response frame of the first frame indicates whether the second apparatus agrees to channel sensing; or
the response frame of the first frame indicates whether the second apparatus receives the first frame.

In a possible implementation of the third aspect,
both the first frame and the response frame of the first frame are management frames; and
a value of a subtype field in a frame control field in the first frame is 0111, and a value of a subtype field in the response frame of the first frame is 1111; or
a value of a subtype field in a frame control field in the first frame is 1111, and a value of a subtype field in the response frame of the first frame is 0111.

In a possible implementation of the third aspect,
both the first frame and the response frame of the first frame are action frames; and
a value of a public action field in the first frame is any one of 34 to 255, and a value of a public action field in the response frame of the first frame is any one of 34 to 255.

In a possible implementation of the third aspect,
the receiving unit is further configured to receive a third frame from the second apparatus, where the third frame includes channel change information between the first apparatus and the second apparatus, and the channel change information is determined based on the n PPDUs.

In a possible implementation of the third aspect,
the sending unit is further configured to send a first trigger frame to the second apparatus, where the first trigger frame includes resource unit RU information carrying the channel change information, and
the RU information carrying the channel change information indicates an RU corresponding to the second apparatus, or
the RU information carrying the channel change information indicates an RU for random access.

In a possible implementation of the third aspect, the third frame is carried in an RU for contention-based channel access.

In a possible implementation of the third aspect, the third frame further includes at least one of the following:
location change information of the second apparatus, or
address information of the part of or all of the n PPDUs.

In a possible implementation of the third aspect,
the sending unit is further configured to send a second trigger frame to the second apparatus, where the second trigger frame includes RU information carrying channel sensing information, and
the RU information carrying the channel sensing information indicates an RU corresponding to the second apparatus, or
the RU information carrying the channel sensing information indicates an RU for contention access.

In a possible implementation of the third aspect, the second frame is carried in an RU for contention-based channel access.

In a possible implementation of the third aspect,
the sending unit is further configured to send a fourth frame to the second apparatus, where the fourth frame includes at least one of the following fields:
a first field, indicating whether beamforming or precoding exists,
a second field, indicating whether to change a transmit power,
a third field, indicating whether to change beamforming-precoding,
a fourth field, indicating a beamforming matrix-a precoding matrix,
a fifth field, indicating whether a transmit power changes, or
a sixth field, indicating a transmit power value.

In a communication process in the fourth aspect, the second apparatus may be configured to perform a communication process in one or more of the following implementations.

In a possible implementation of the fourth aspect,
the sending unit is further configured to send a response frame of the first frame to the first apparatus, where
the response frame of the first frame indicates whether the second apparatus agrees to channel sensing; or
the response frame of the first frame indicates whether the second apparatus receives the first frame.

In a possible implementation of the fourth aspect,
both the first frame and the response frame of the first frame are management frames; and
a value of a subtype field in a frame control field in the first frame is 0111, and a value of a subtype field in the response frame of the first frame is 1111; or
a value of a subtype field in a frame control field in the first frame is 1111, and a value of a subtype field in the response frame of the first frame is 0111.

In a possible implementation of the fourth aspect,
both the first frame and the response frame of the first frame are action frames; and
a value of a public action field in the first frame is any one of 34 to 255, and a value of a public action field in the response frame of the first frame is any one of 34 to 255.

In a possible implementation of the fourth aspect,
the sending unit is further configured to send a third frame to the second apparatus, where the third frame includes channel change information between the first apparatus and the second apparatus, and the channel change information is determined based on the n PPDUs.

In a possible implementation of the fourth aspect,
the receiving unit is further configured to receive a first trigger frame from the first apparatus, where the first trigger frame includes resource unit RU information carrying the channel change information, and
the RU information carrying the channel change information indicates an RU corresponding to the second apparatus, or
the RU information carrying the channel change information indicates an RU for random access.

In a possible implementation of the fourth aspect, the third frame is carried in an RU for contention-based channel access.

In a possible implementation of the fourth aspect, the third frame further includes at least one of the following:
location change information of the second apparatus, or
address information of the part of or all of the n PPDUs.

In a possible implementation of the fourth aspect,
the receiving unit is further configured to receive a second trigger frame from the first apparatus, where the second trigger frame includes RU information carrying channel sensing information, and
the RU information carrying the channel sensing information indicates an RU corresponding to the second apparatus, or
the RU information carrying the channel sensing information indicates an RU for contention access.

In a possible implementation of the fourth aspect, the second frame is carried in an RU for contention-based channel access.

In a possible implementation of the fourth aspect,
the receiving unit is further configured to receive a fourth frame from the first apparatus, where the fourth frame includes at least one of the following fields:
a first field, indicating whether beamforming or precoding exists,
a second field, indicating whether to change a transmit power,
a third field, indicating whether to change beamforming-precoding,
a fourth field, indicating a beamforming matrix-a precoding matrix,
a fifth field, indicating whether a transmit power changes, or
a sixth field, indicating a transmit power value.

A fifth aspect of embodiments of this application provides an apparatus, including at least one processor. The at least one processor is coupled to a memory, the memory is configured to store a program or instructions, and the at least one processor is configured to execute the program or the instructions, so that the apparatus implements the method according to any one of the first aspect or the possible implementations of the first aspect.

A sixth aspect of embodiments of this application provides an apparatus, including at least one processor. The at least one processor is coupled to a memory, the memory is configured to store a program or instructions, and the at least one processor is configured to execute the program or the instructions, so that the apparatus implements the method according to any one of the second aspect or the possible implementations of the second aspect.

A seventh aspect of embodiments of this application provides a computer-readable storage medium storing one or more computer-executable instructions. When the computer-executable instructions are executed by a processor, the processor performs the method according to any one of the first aspect or the possible implementations of the first aspect, or the processor performs the method according to any one of the second aspect or the possible implementations of the second aspect.

An eighth aspect of embodiments of this application provides a computer program product (or referred to as a computer program) storing one or more computer instructions. When the computer program product is executed by a processor, the processor performs the method according to any one of the first aspect or the possible implementations of the first aspect, or the processor performs the method according to any one of the second aspect or the possible implementations of the second aspect.

A ninth aspect of embodiments of this application provides a chip system. The chip system includes at least one processor, configured to support an apparatus in implementing a function according to any one of the first aspect or the possible implementations of the first aspect, or configured to support an apparatus in implementing a function according to any one of the second aspect or the possible implementations of the second aspect.

In a possible design, the chip system further includes a memory, configured to store program instructions and data that are necessary for the apparatus. The chip system may include a chip, or may include a chip and another discrete component. Optionally, the chip system further includes an interface circuit, and the interface circuit provides program instructions and/or data for the at least one processor.

A tenth aspect of embodiments of this application provides a communication system. The communication system includes the apparatus in the third aspect and the apparatus in the fourth aspect, and/or the communication system includes the apparatus in the fifth aspect and the apparatus in the sixth aspect.

For technical effect of any design manner in the fifth aspect to the tenth aspect, refer to technical effect of different implementations of the first aspect or the second aspect. Details are not described herein again.

It can be learned from the foregoing technical solutions that, after the first apparatus sends, to the second apparatus, the first frame used to request channel sensing, the second apparatus can perform channel sensing based on the n PPDUs sent by the first apparatus, and determine the channel sensing information transmitted between the first apparatus and the second apparatus for the part of or all of the n PPDUs. Then, the first apparatus receives the second frame including the channel sensing information from the second apparatus, and implements the channel sensing procedure. Therefore, based on the n PPDUs sent by the first apparatus, a channel sensing procedure between different apparatuses can be implemented while the communication requirement of the first apparatus is met, thereby improving communication efficiency of the WLAN system and reducing overheads.

### BRIEF DESCRIPTION OF DRAWINGS

FIG. 1 is a schematic diagram of a communication system to which this application is applicable;
FIG. 2a is a schematic diagram of an AP according to this application;
FIG. 2b is a schematic diagram of a STA according to this application;
FIG. 3a is a schematic diagram of a communication method according to this application;
FIG. 3b is another schematic diagram of a communication method according to this application;
FIG. 4a is a schematic diagram of a communication method according to this application;
FIG. 4b is another schematic diagram of a communication method according to this application;
FIG. 5a is a schematic diagram of a communication method according to this application;
FIG. 5b is another schematic diagram of a communication method according to this application;
FIG. 6 is a schematic diagram of a communication method according to an embodiment of this application;
FIG. 7a is a schematic diagram of a radio frame according to an embodiment of this application;
FIG. 7b is another schematic diagram of a radio frame according to an embodiment of this application;
FIG. 8 is another schematic diagram of a communication method according to an embodiment of this application;
FIG. 9a is another schematic diagram of a radio frame according to an embodiment of this application;
FIG. 9b is another schematic diagram of a radio frame according to an embodiment of this application;
FIG. 10a is another schematic diagram of a radio frame according to an embodiment of this application;
FIG. 10b is another schematic diagram of a radio frame according to an embodiment of this application;
FIG. 11a is another schematic diagram of a radio frame according to an embodiment of this application;
FIG. 11b is another schematic diagram of a radio frame according to an embodiment of this application;
FIG. 12 is another schematic diagram of a radio frame according to an embodiment of this application;
FIG. 13 is another schematic diagram of a communication system to which this application is applicable;
FIG. 14 is another schematic diagram of a communication method according to an embodiment of this application;
FIG. 15 is another schematic diagram of a communication method according to an embodiment of this application;
FIG. 16 is another schematic diagram of a communication method according to an embodiment of this application;
FIG. 17 is another schematic diagram of a communication method according to an embodiment of this application;
FIG. 18 is a schematic diagram of an apparatus according to an embodiment of this application; and
FIG. 19 is another schematic diagram of an apparatus according to an embodiment of this application.

### DESCRIPTION OF EMBODIMENTS

The following clearly and completely describes technical solutions in embodiments of this application with reference to accompanying drawings in embodiments of this application.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

In descriptions of this application, terms such as "first" and "second" do not limit a quantity and an execution sequence, and the terms such as "first" and "second" do not indicate a definite difference.

In this application, the term "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the term "example", "in an example", "for example", or the like is intended to present a concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element represented in a singular form is intended to represent "one or more", but does not represent "one and only one", unless otherwise specified.

In this application, unless otherwise specified, for same or similar parts of embodiments or implementations, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, or implementation method based on an internal logical relationship thereof. The following implementations of this application are not intended to limit the protection scope of this application.

For ease of understanding the method provided in embodiments of this application, the following describes a system architecture of the method provided in embodiments of this application. It may be understood that the system architecture described in embodiments of this application is intended to describe the technical solutions in embodiments of this application more clearly, and do not constitute any limitation on the technical solutions provided in embodiments of this application.

The technical solutions provided in this application are applicable to various communication systems, for example, a system using the 802.11 standard. For example, the 802.11 standard includes but is not limited to the 802.11be standard or the next-generation 802.11 standard. A scenario to which the technical solutions of this application are applicable includes communication between an AP and one or more STAs, communication between APs, or communication between STAs. In embodiments of this application, the term "communication" may also be described as "data transmission", "information transmission", or "transmission".

Currently, WLANs have gone through many generations, such as 802.11a/b/g, 802.11n, 802.11ac, 802.11ax, and 802.11be that is being discussed. The 802.11n standard may be referred to as high throughput (high throughput, HT), the 802.11 ac standard may be referred to as very high throughput (very high throughput, VHT), the 802.11ax (Wi-Fi 6) may be referred to as high efficient (high efficient, HE), the 802.11be (Wi-Fi 7) may be referred to as extremely high throughput (extremely high throughput, EHT), and standards before HT, such as 802.11a/b/g, may be collectively referred to as non-high throughput (Non-HT).

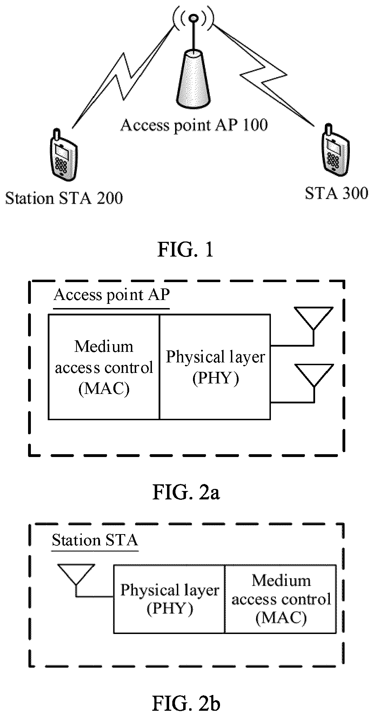

FIG. 1 is a schematic diagram of an architecture of a wireless communication system according to an embodiment of this application. As shown in FIG. 1, the wireless communication system may include one or more APs (for example, an AP 100 in FIG. 1) and one or more STAs (for example, a STA 200 and a STA 300 in FIG. 1). The AP and the STA support a WLAN communication protocol. The communication protocol may include 802.11be (or referred to as Wi-Fi 7, an extremely high throughput (extremely high throughput, EHT) protocol), and may further include protocols such as 802.11 ax, 802.11 ac, and 802.11bf. Certainly, with the continuous evolution and development of communication technologies, the communication protocol may further include a next generation protocol of 802.11be, and the like. A WLAN is used as an example, an apparatus for implementing the method in this application may be an AP or a STA in the WLAN, or a chip or a processing system installed in an AP or a STA.

Optionally, an access point (for example, the AP 100 in FIG. 1) in this application is an apparatus having a wireless communication function, supports communication via a wireless local area network (wireless local area network, WLAN) protocol, and has a function of communicating with another device (for example, a station or another access point) in a WLAN network. Certainly, the access point may also have a function of communicating with another device. In a WLAN system, an access point may be referred to as an access point station (access point station, AP STA). The apparatus having the wireless communication function may be an entire device, or may be a chip or a processing system installed in an entire device. A device in which the chip or the processing system is installed may implement the method and the function in embodiments of this application under control of the chip or the processing system. The AP in embodiments of this application is an apparatus that provides a service for the STA, and may support a series of protocols of 802.11. For example, the AP may be a communication entity such as a communication server, a router, a switch, or a bridge. The AP may include a macro base station, a micro base station, a relay station, and the like in various forms. Certainly, the AP may alternatively be a chip and a processing system in these devices in various forms, to implement the method and the function in embodiments of this application.

Optionally, a station (for example, the STA 200 or the STA 300 in FIG. 1) in this application is an apparatus having a wireless communication function, supports communication via a WLAN protocol, and has a capability of communicating with another station or an access point in a WLAN network. In a WLAN system, the station may be referred to as a non-access point station (non-access point station, non-AP STA). For example, the STA is any user communication device that allows a user to communicate with the AP and further communicate with the WLAN. The apparatus having the wireless communication function may be an entire device, or may be a chip or a processing system installed in an entire device. A device in which the chip or the processing system is installed may implement the method and the function in embodiments of this application under control of the chip or the processing system. For example, the STA may be user equipment that can be connected to the internet, for example, a tablet computer, a desktop computer, a laptop computer, a notebook computer, an ultra-mobile personal computer (Ultra-mobile personal computer, UMPC), a handheld computer, a netbook, a personal digital assistant (personal digital assistant, PDA), or a mobile phone; or an internet of things node in the internet of things, an in-vehicle apparatus in the internet of vehicles, an entertainment device, a game device or system, a global positioning system device, or the like. Alternatively, the STA may be a chip and a processing system in the foregoing terminals.

The WLAN system can provide high-speed and low-latency transmission. With the continuous evolution of WLAN application scenarios, the WLAN system is to be applicable to more scenarios or industries, for example, the internet of things industry, the internet of vehicles industry, a banking industry, enterprise offices, exhibition halls of stadiums, concert halls, hotel rooms, dormitories, wards, classrooms, supermarkets, squares, streets, production workshops and warehousing. Certainly, a device (for example, an access point or a station) that supports WLAN communication may be a sensor node (for example, a smart water meter, a smart electricity meter, or a smart air detection node) in a smart city, a smart device (for example, a smart camera, a projector, a display screen, a television, a stereo, a refrigerator, or a washing machine) in a smart home, a node in the internet of things, an entertainment terminal (for example, a wearable device such as augmented reality (augmented reality, AR) or virtual reality (virtual reality, VR)), a smart device (for example, a printer, a projector, a speaker, or a stereo) in smart office, an internet of vehicles device in the internet of vehicles, an infrastructure (for example, a vending machine, a self-service navigation console of a supermarket, a self-service cashier, or a self-service ordering machine) in a daily life scenario, a device in a large sports and music venue, and the like. Specific forms of the STA and the AP are not limited in embodiments of this application, and are merely examples for description herein.

It should be understood that the 802.11 standard focuses on a physical layer (physical layer, PHY) and a medium access control (medium access control, MAC) layer. For example, FIG. 2a is a schematic diagram of a structure of an access point according to an embodiment of this application. The AP may be a multi-antenna/multi-radio frequency AP, or may be a singleantenna/single-radio frequency AP. The antenna/radio frequency is used to send/receive data packets (the data packet in this specification may also be referred to as a physical layer protocol data unit, PPDU). In an implementation, an antenna part or a radio frequency part of the AP may be separated from a main body part of the AP, and is in a remote layout structure. In FIG. 2a, the AP may include a physical layer processing circuit and a media access control processing circuit. The physical layer processing circuit may be configured to process a physical layer signal, and the MAC layer processing circuit may be configured to process a MAC layer signal. For another example, FIG. 2b is a schematic diagram of a structure of a station according to an embodiment of this application. FIG. 2b is a schematic diagram of a structure of a single-antenna/single-radiofrequency STA. In an actual scenario, the STA may alternatively be a multi-antenna/multi-radio frequency STA, and may be a device with more than two antennas. The antenna/radio frequency is configured to send/receive a data packet. In an implementation, an antenna part or a radio frequency part of the STA may be separated from a main body part of the STA, and is in a remote layout structure. In FIG. 2b, the STA may include a PHY processing circuit and a MAC processing circuit. The physical layer processing circuit may be configured to process a physical layer signal, and the MAC layer processing circuit may be configured to process a MAC layer signal.

It should be noted that embodiments of this application relate to WLAN communication. It should be understood that the foregoing content is merely some examples of application scenarios of this application.

The foregoing content briefly describes the system architecture in embodiments of this application. To better understand the technical solutions in embodiments of this application, the following describes a channel sounding procedure related to embodiments of this application.

In an implementation, in a channel sounding procedure in 802.11ac/802.11ax, corresponding CSI information is collected by sending a null data physical layer protocol data unit (null data physical layer protocol data unit, NDP) frame, and then a parameter related to an environment change is extracted from the CSI information for sensing. In 802.11 ac/802.11 ax, only an explicit channel sounding manner is reserved, that is, a beamformer initiates channel sounding and sends an NDP, and a beamformee receives the NDP and performs channel estimation.

Only one channel sounding feedback scheme is defined in the 802.11 ac standard, and only an explicit feedback mechanism is supported to transmit a compression weighting matrix. An NDP (namely, null data PPDU) frame detection manner is used to reduce system overheads and improve system efficiency. An overall procedure is as follows: The beamformer (Beamformer) first sends a null data physical layer protocol data unit announcement (null data physical layer protocol data unit announcement, NDPA), and then sends the NDP after a short interframe space (short interframe space, SIFS); and in this case, the beamformee (Beamformee) measures the NDP, and then feeds back a measured result to the Beamformer.

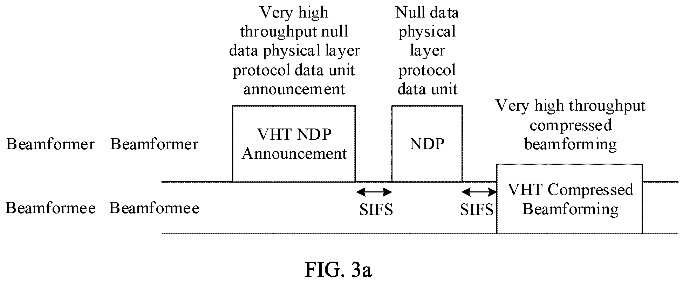

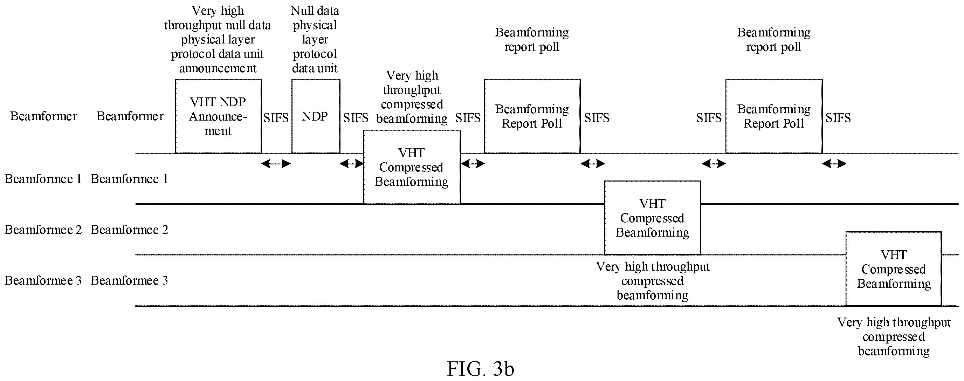

Optionally, feedback of a single beamformee is different from that of multiple beamsformees. With reference to FIG. 3a and FIG. 3b, descriptions are provided below by using a VHT communication scenario as an example.

For example, during single-user detection, an implementation process may be shown in FIG. 3a. In FIG. 3a, after a beamformer sends a very high throughput null data physical layer protocol data unit announcement (VHT NDP Announcement), the beamformer sends an NDP after a SIFS. Then, a single beamformee feeds back a very high throughput compressed beamforming (VHT Compressed Beamforming) matrix to the beamformer.

For another example, during multi-user detection, an implementation process may be shown in FIG. 3b. In FIG. 3b, for example, the multiple users include three users. After a beamformer sends a very high throughput null data physical layer protocol data unit announcement (VHT NDP Announcement), the beamformer sends an NDP after a SIFS. A first user (denoted as a beamformee 1) feeds back a very high throughput compressed beamforming (VHT Compressed Beamforming) matrix after a SIFS, but feedback of another beamformee can be sent only after the beamformer sends a beamforming poll (Beamforming Poll) frame for polling.

In addition, uplink multi-user (uplink multiple user, UL MU) link multi-user transmission is introduced in 802.11 ax. If feedback is performed in a polling manner as in 802.11 ac, a delay is long, and timeliness of a feedback compression matrix is very low. Therefore, in 802.11 ax, a feedback manner based on a beam failure recovery response trigger (beam failure recovery response trigger, BFRP Trigger) beamforming report polling trigger frame is proposed for multi-user MIMO.

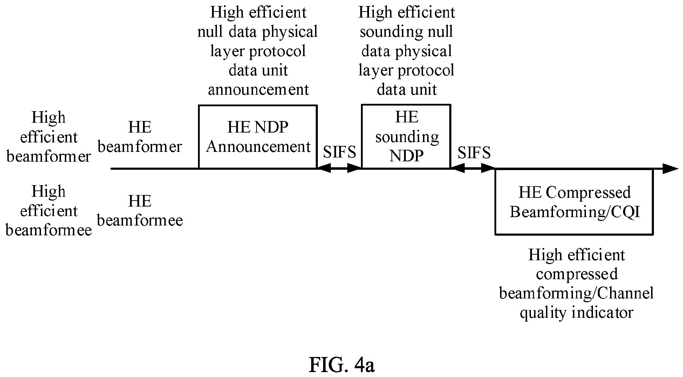

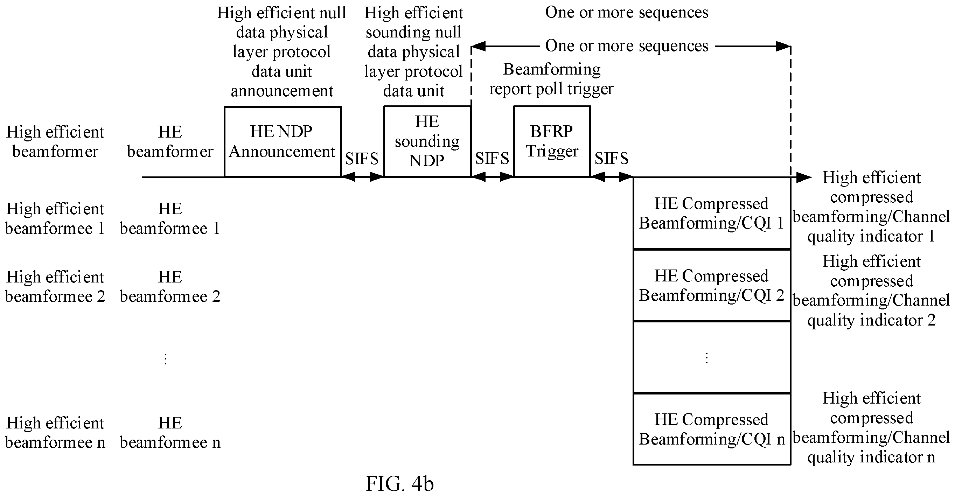

Optionally, feedback of a single beamformee is different from that of multiple beamsformees. With reference to FIG. 4a and FIG. 4b, descriptions are provided below by using an HE communication scenario as an example.

For example, during single-user detection, an implementation process may be shown in FIG. 4a. In FIG. 4a, after a beamformer sends a high efficient null data physical layer protocol data unit announcement (HE NDP Announcement), the beamformer sends a high efficient sounding null data physical layer protocol data unit announcement (HE sounding NDP) after a SIFS. Then, a single beamformee feeds back a high efficient compressed beamforming (HE Compressed Beamforming) matrix or a channel quality indicator (channel quality indicator, CQI) to the beamformer.

For another example, during multi-user detection, an implementation process may be shown in FIG. 4b. In FIG. 4b, for example, the multiple users include n (n is greater than 2) users. After a beamformer sends a high efficient null data physical layer protocol data unit announcement (HE NDP Announcement), the beamformer sends a high efficient sounding null data physical layer protocol data unit announcement (HE sounding NDP) after a SIFS. The multiple users (including an HE beamformee 1, an HE beamformee 2, ..., and an HE beamformee n) feed back measured results (including an HE compressed beamforming/CQI 1, an HE compressed beamforming/CQI 2, ..., and an HE compressed beamforming/CQI n) on one or more sequences (one or more sequences) based on trigger of BFRP trigger.

Optionally, in 802.11be (EHT), a format of an NDP is shown in Table 1 below.

**Table 1**

| | | | | | | | | |
|---|---|---|---|---|---|---|---|---|
| Legacy short training field | Legacy long training field | Legacy signal field (legacy | Repeated legacy signal field | Universal legacy signal field | Extremely high throughput signal field | Extremely high throughput short | Extremely high throughput long | Packet extension (packet extension, |
| (legacy short training field, L-STF) | (legacy long training field, L-LTF) | signal field, L-SIG) | (repeated legacy signal field, RL-SIG) | (universal legacy Signal Field, U-SIG) | (EHT-SIG) | training field (EHT-STF) | training field (EHT-LTF) | PE) |

Optionally, in the foregoing implementation process, a function of the NDP is as follows: A receiver of a wireless signal may perform channel measurement based on the EHT-LTF field, and further perform sensing based on measurement information.

With the development of WLAN communication technologies, wide deployment of WLAN devices, and increase of sensing (Sensing) requirements, to perform sensing through a radio signal transmitted by a WLAN device that is generally easily obtained is a hot topic in current research. A signal sent by the WLAN device is usually received after being reflected, diffracted, and scattered by various obstacles. As a result, an actually received signal is usually obtained by superimposing multiple signals, and this causes interference to communication. However, from another perspective, this also brings convenience for sensing, through a radio signal, a physical environment that the radio signal passes through. A radio signal affected by various obstacles is analyzed, and a peripheral environment of the WLAN device can be inferred or sensed. Therefore, a WLAN sensing technology is developed.

In the WLAN sensing technology, the following four roles need to be specified, and include:
a sensing initiator: a station that initiates a sensing procedure (Sensing initiator: a STA that initiates a WLAN sensing procedure);
a sensing responder: a station that participates in a sensing procedure initiated by a sensing initiator (Sensing responder: a STA that participates in a WLAN sensing procedure initiated by a sensing initiator);
a sensing transmitter: a station that transmits PPDUs used for sensing measurements in a sensing procedure (Sensing transmitter: a STA that transmits PPDUs used for sensing measurements in a sensing procedure); and
a sensing receiver: a station that receives PPDUs sent by a sensing transmitter and performs sensing measurements in a sensing procedure (Sensing receiver: a STA that receives PPDUs sent by a sensing transmitter and performs sensing measurements in a sensing procedure).

In a schematic design example of a sensing procedure, the sensing procedure is mainly divided into five types of steps.
A. Sensing session setup (Sensing session setup): Sensing session setup is a step in which a sensing session is set up between stations. Some related parameters can be exchanged here (to be determined).
   Optionally, a sensing session is a protocol reached by one sensing initiator and one sensing responder. One sensing initiator may maintain sensing sessions with multiple sensing responders (but the sensing sessions still need to be established one by one, for example, in an OFDMA manner or an MU-MIMO manner).
B. Measurement setup (Measurement setup): Measurement setup is a step for exchanging and unifying sensing parameters and attributes, that need to be used in the sensing procedure, by the initiator and the responder, for example, sensing parameters such as a role of the initiator and a role of the responder (like a sensing transmitter and a sensing receiver), and a measurement reporting type.
C. Measurement instance (Measurement instance): Sensing measurement is performed in a sensing measurement instance. One sensing measurement instance allows multiple sensing responders to join.
D. Measurement setup termination (Measurement setup termination): Measurement setup termination is a step for terminating a measurement setup procedure corresponding to a specific sensing responder, so that the responder is not bound to corresponding measurement setup, but can still be in a sensing session.
E. Sensing session termination (Sensing session termination): Sensing session termination is a step in which a sensing session is terminated, and a station does not participate in a procedure like sensing measurement.

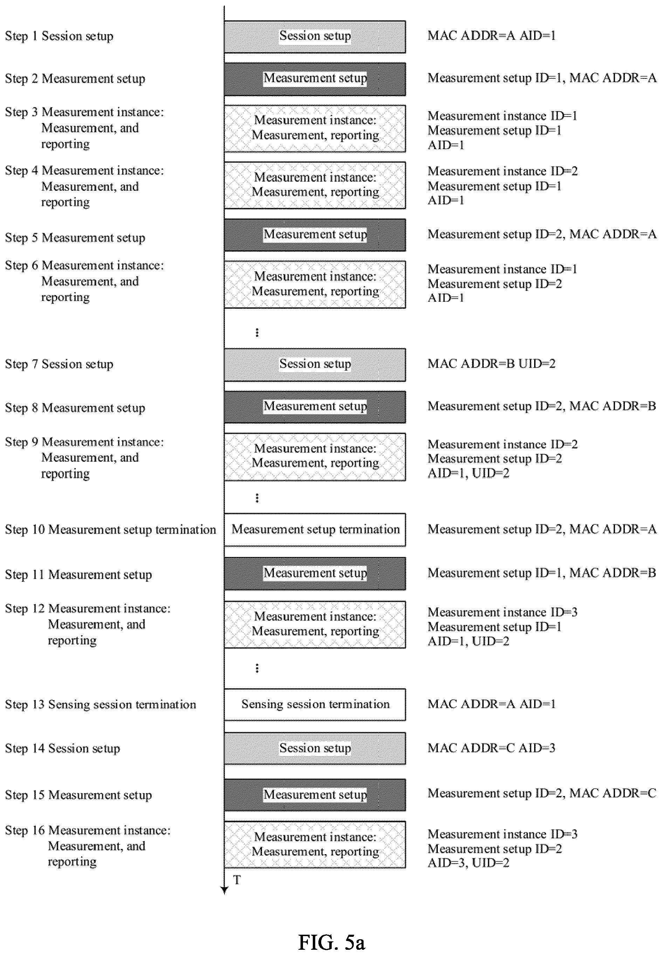

To more clearly show how the foregoing procedure operates, the following describes a schematic diagram of a sensing procedure with reference to FIG. 5a. FIG. 5a is a schematic diagram of the sensing procedure with 16 steps, and the 16 steps can clearly indicate a process of the existing sensing procedure. The specific procedure is as follows.

Step 1 is, namely, session setup (session setup) in Step A, a step in which a station whose MAC address is A (denoted as MAC AD DR=A) and association identifier (association identifier, AID) is 1 (denoted as AID=1) joins a sensing session, that is, a sensing session setup procedure.

Step 2 is, namely, measurement setup (Measurement setup) in Step B, a step for configuring related parameters for the station, that is, sensing measurement setup.

Optionally, for clear identification, a manner of establishing a label (denoted as Measurement setup ID=1) for sensing measurement may be used in this step.

Step 3 is, namely, the measurement instance (Measurement instance) in Step C, a step for measurement (Measurement) and reporting (reporting).

Optionally, this step is the measurement instance, and one measurement instance is bound to one sensing measurement setup identifier. Therefore, in the measurement instance, the station whose AID=1 may be measured, and each measurement instance also has a corresponding label (denoted as Measurement instance ID=1, Measurement setup ID=1, AID=1).

To sum up, Steps 1, 2, and 3 are to add the station to the sensing session and start measurement and reporting.

Step 4 is, namely, a measurement instance (Measurement instance), a step for measurement (Measurement) and reporting (reporting).

The measurement instance is identified by adding by 1 to distinguish from the previous measurement instance, namely, changed to a Measurement instance 2 (denoted as Measurement instance ID=2, Measurement setup ID=1, AID=1) under Measurement setup 1.

Steps 5 and 6 are similar to Steps 2 and 3, and are steps for configuring Measurement setup 2 for the station and perform measurement and reporting.

Steps 7, 8, and 9 are similar to Steps 1, 2, and 3, and are steps for adding a station with an unassociated association identifier (unassociated association identification, AID) 2 (denoted as UID=2) to a sensing session, and assigning a measurement setup ID=2 to the station,so that then, a measurement instance occurs.

Step 10 is, namely, measurement setup termination (Measurement setup termination) in Step D, a step for unbinding the AID 1 from Measurement setup ID=2.

Steps 11 and 12 are similar to Steps 2 and 3, and are steps for configuring Measurement setup ID=1 for the station with UID=2.

Step 13 is, namely, sensing session termination (Sensing session termination) in Step E, a step for exiting the station with AID=1 from the sensing session.

Steps 14, 15, and 16 are similar to Steps 1, 2, and 3, and are steps for adding a station with AID=3 in a sensing session and binding measurement setup ID=2. Therefore, in Step 16, it can be seen that the station with AID=3 and the station with UID=2 can participate in sensing measurement and reporting in a measurement instance at the same time.

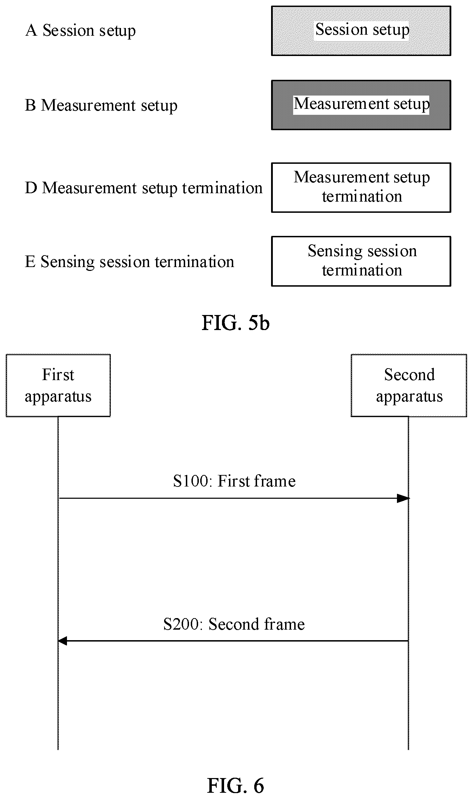

Optionally, four steps (namely, Step A, Step B, Step D, and Step E) shown in FIG. 5b each belong to a one-to-one setup step. A sensing session setup step is used as an example. Setup of one sensing session corresponds to one sensing initiator and one sensing responder. Certainly, a sensing initiator may also set up a procedure with multiple stations at the same time, for example, in an OFDMA form or an MU-MIMO form. However, this belongs to that multiple sensing sessions are set up at the same time, and cannot be counted as one sensing session.

Optionally, for a measurement instance, different from the foregoing four steps, one measurement instance may have a one-to-many situation, for example, one-to-many announcement and triggering.

In a possible implementation, the measurement instance may include a trigger based sensing measurement instance (TB sensing measurement instance) and a non-trigger based sensing measurement instance (Non-TB sensing measurement instance). The trigger based sensing measurement instance includes a polling phase (Polling phase), an NDP announcement sounding (NDPA sounding) phase, a trigger frame sounding (TF sounding) phase, a report phase, and the like.

Optionally, the polling phase is used to confirm that a polled station can participate in measurement and reporting in the current measurement instance.

Optionally, in the NDP announcement sounding phase, the sensing initiator may notify, by using an NDPA (NDP Announcement), a corresponding station that the sensing initiator will send an NDP immediately after the NDPA, where the NDPA is used to notify the station that needs to listen to the NDP and other configuration information, and the corresponding station may measure the subsequently sent NDP to learn of channel information.

Optionally, in the trigger frame sounding phase, the sensing initiator may trigger, by using a trigger frame, a peer end to transmit the NDP, and measure the transmitted NDP to perform sensing.

However, in the foregoing sensing measurement procedure, the dedicated sensing session needs to be set up to perform sensing, and a manner of performing sensing by using a PPDU not for sensing is not provided.

In addition, in the foregoing sensing measurement procedure and the foregoing channel sounding process, the NDPA frame and the dedicated NDP need to be sent to perform channel sounding. In other words, channel sounding or channel sensing can be implemented only after the NDPA and the NDP specially used for channel sounding are sent and received. Consequently, overheads are high, and communication efficiency of a WLAN system is low.

In view of this, this application provides a communication method and an apparatus, to implement a channel sensing procedure between different apparatuses while meeting a communication requirement, thereby improving communication efficiency of a WLAN system and reducing overheads. The following further describes the communication method provided in this application with reference to the accompanying drawings.

FIG. 6 is a schematic diagram of a communication method according to this application. The method includes the following steps.

S 100: A first apparatus sends a first frame to a second apparatus.

In embodiments, the first apparatus sends the first frame in step S100, and correspondingly, the second apparatus receives the first frame in step S 100. The first frame is used to request channel sensing.

It should be noted that the first apparatus and/or the second apparatus may be a WLAN device, or the first apparatus and/or the second apparatus may be some components in a WLAN device. The WLAN device may include a STA or an AP, and the some components in the WLAN device may include a processor, a chip, a chip system, or the like.

For example, the first apparatus may be an AP (namely, an AP STA), and the second apparatus may be a STA (namely, a non-AP STA).

For another example, the first apparatus may be an AP (namely, an AP STA), and the second apparatus may be an AP (namely, an AP STA).

For another example, the first apparatus may be a STA (namely, a non-AP STA), and the second apparatus may be an AP (namely, an AP STA).

For another example, the first apparatus may be a STA (namely, a non-AP STA), and the second apparatus may be a STA (namely, a non-AP STA).

Optionally, in embodiments of this application, the first apparatus may be used as at least one of a sensing initiator, a sensing responder, a sensing transmitter, or a sensing receiver in a sensing procedure. Similarly, the second apparatus may be used as at least one of a sensing initiator, a sensing responder, a sensing transmitter, or a sensing receiver in the sensing procedure.

For example, the first apparatus may be used as a sensing initiator and a sensing transmitter, and the second apparatus may be used as a sensing responder and a sensing receiver.

For another example, the first apparatus is a sensing responder and a sensing transmitter, the second apparatus may be used as a sensing responder and a sensing receiver, and a sensing initiator is another apparatus, for example, a fourth apparatus.

For another example, the first apparatus is an AP, and the second apparatus is a STA. The STA sends a communication PPDU, so that the AP can sense the PPDU. In this case, the STA is a sensing initiator, and the AP is a sensing receiver.

S200: The second apparatus sends a second frame to the first apparatus.

In embodiments, the second apparatus sends the second frame in step S200, and correspondingly, the first apparatus receives the second frame in step S200. The second frame includes channel sensing information between the first apparatus and the second apparatus. The channel sensing information is determined based on a part of or all of n (physical protocol data units, PPDUs), and the n PPDUs are PPDUs sent by the first apparatus, n is greater than or equal to 1.

It should be noted that the PPDU in this application may include at least one of a single user physical layer protocol data unit (single user physical protocol data unit, SU-PPDU), a multiple user physical layer protocol data unit (multiple user physical protocol data unit, MU-PPDU), a trigger based physical layer protocol data unit (trigger based physical layer protocol data unit, TB PPDU), or another PPDU.

In embodiments of this application, channel sensing information between the first apparatus and the second apparatus may alternatively be expressed as (peripheral/physical) environment sensing information between the first apparatus and the second apparatus, may be expressed as sensing information between the first apparatus and the second apparatus, may be expressed as sensing measurement information between the first apparatus and the second apparatus, or may be expressed as sensing feedback information between the first apparatus and the second apparatus.

In addition, in embodiments of this application, that the n PPDUs are PPDUs sent by the first apparatus includes that the n PPDUs are PPDUs sent by the first apparatus to another apparatus. The another apparatus may include the second apparatus and/or an apparatus (for example, a third apparatus mentioned below) different from the second apparatus. This is not limited herein.

In a possible implementation, the part of or all of the PPDUs include m PPDUs, m is greater than or equal to 1, and m is less than or equal to n; and the m PPDUs included in the part of or all of the PPDUs are respectively located in m PPDU sets of the n PPDUs, the m PPDU sets include a first PPDU set and a second PPDU set that are adjacent to each other, and change information between CSI corresponding to a PPDU in the first PPDU set and CSI corresponding to a PPDU in the second PPDU set is greater than a first threshold.

Optionally, change information between CSI corresponding to a PPDU in the first PPDU set and CSI corresponding to a PPDU in the second PPDU set is greater than or equal to a first threshold.

Specifically, the channel sensing information included in the second frame is determined based on the m PPDUs. In other words, the second frame includes channel sensing information corresponding to the m PPDUs. The m PPDUs are respectively located in the m PPDU sets of the n PPDUs, and for the first PPDU set and the second PPDU set that are adjacent to each other in the m PPDU sets, the change information between the CSI corresponding to the PPDU in the first PPDU set and the CSI corresponding to the PPDU in the second PPDU set is greater than the first threshold. In other words, in the m PPDU sets of the n PPDUs, CSI corresponding to PPDUs included in adjacent PPDU sets changes greatly. Therefore, the channel sensing information included in the second frame corresponds to PPDUs in the adjacent PPDU sets whose CSI changes greatly, so that a receiver of the second frame can know a difference between different channel sensing information included in the second frame.

In addition, when m is less than n, the second apparatus does not need to feed back channel sensing information corresponding to all PPDUs in the n PPDUs. This saves overheads.

Optionally, "m" is less than or equal to "k". For example, it is considered a limitation such as storage space or a transmission resource, a maximum quantity (denoted as "k") of PPDUs corresponding to the channel sensing information included in the second frame may be limited, where "k" may be pre-configured or pre-stored in the second apparatus, "k" indicates the maximum quantity of PPDUs corresponding to the channel sensing information included in the second frame (which is allowed to be sent by the second apparatus). In other words, a quantity of PPDUs corresponding to the channel sensing information included in the second frame sent by the second apparatus in step S200 is less than or equal to k.

In some implementations, the second apparatus determines to denote a quantity of PPDU sets, in the n PPDUs, that meet a condition that a change of CSI corresponding to PPDUs included in adjacent PPDU sets is greater than the first threshold as "x". When x is less than or equal to k, the second frame sent by the second apparatus in step S200 includes channel sensing information corresponding to the x PPDUs; or when x is greater than k, the second frame sent by the second apparatus in step S200 includes channel sensing information corresponding to k PPDUs of the x PPDUs.

Optionally, channel sensing information corresponding to k PPDUs of the x PPDUs includes channel sensing information corresponding to first k PPDUs of the x PPDUs, channel sensing information corresponding to last k PPDUs of the x PPDUs, or channel sensing information corresponding to any k PPDUs of the x PPDUs.

For example, descriptions are provided herein by using an example in which n is equal to 9. That is, the first apparatus sends nine PPDUs, which are respectively denoted as a PPDU 1, PPDU 2, PPDU 3, PPDU 4, PPDU 5, PPDU 6, PPDU 7, PPDU 8, and a PPDU 9. It should be noted that different PPDUs in embodiments of this application may be distinguished by using numbers, serial numbers, sequence numbers (Sequence Numbers), or other manners. In this embodiment and subsequent embodiments, descriptions are provided by using only an implementation of adding a number after a PPDU (namely, PPDU x, where x includes any one of 1 to 9) as an example.

The second frame sent by the second apparatus in step S200 may include channel sensing information corresponding to a part of or all of the nine PPDUs. The following describes in detail with reference to some implementation examples.

In a possible implementation, when change information of CSI between any two adjacent PPDUs of the nine PPDUs is greater than a first threshold, that is, change information of CSI between the PPDU 1 and the PPDU 2 (and the PPDU 2 and the PPDU 3, the PPDU 3 and the PPDU 4, the PPDU 4 and the PPDU 5, the PPDU 5 and the PPDU 6, the PPDU 6 and the PPDU 7, the PPDU 7 and the PPDU 8, and the PPDU 8 and the PPDU 9) is greater than the first threshold, the second frame fed back by the second apparatus in step S200 includes the channel sensing information corresponding to the nine PPDUs. In this example, m is equal to 9.

Optionally, if "k" may be pre-configured or pre-stored in the second apparatus, for example, "k" is 3, due to a limitation of "k", in this possible implementation, the second apparatus determines that the quantity x of PPDU sets, of the nine PPDUs, that meet a condition that a change of CSI corresponding to PPDUs included in adjacent PPDU sets is greater than the first threshold is 9. However, the second frame fed back by the second apparatus in step S200 includes channel sensing information corresponding to three PPDUs, instead of the channel sensing information corresponding to the nine PPDUs. The "three PPDUs" may be first three PPDUs in the "nine PPDUs", the "three PPDUs" may be last three PPDUs in the "nine PPDUs", or the "three PPDUs" may be any three PPDUs in the "nine PPDUs". This is not limited herein.

In a possible implementation, when not all change information of CSI between any two non-adjacent PPDUs in the nine PPDUs is greater than the first threshold, for example, only change information of CSI between the PPDU 1 and the PPDU 2 (and between the PPDU 3 and the PPDU 4, and between the PPDU 6 and the PPDU 7) is greater than the first threshold, and change information of CSI between the PPDU 2 and the PPDU 3 (and between the PPDU 4 and the PPDU 5, between the PPDU 5 and the PPDU 6, between the PPDU 7 and the PPDU 8, and the PPDU 8 and the PPDU 9) is less than the first threshold, the second frame fed back by the second apparatus in step S200 includes channel sensing information corresponding to m PPDU sets, of the nine PPDUs, with a change greater than a first threshold. In this example, m is equal to 4, and the m PPDU sets may be represented as:
a first PPDU set, including the PPDU 1;
a second PPDU set, including the PPDU 2 and the PPDU 3;
a third PPDU set, including the PPDU 4, the PPDU 5, and the PPDU 6; and
a fourth PPDU set, including the PPDU 7, the PPDU 8, and the PPDU 9.

In other words, the second frame fed back by the second apparatus in step S200 includes channel sensing information corresponding to the four PPDU sets, so that the second apparatus does not need to feed back channel sensing information corresponding to all PPDUs in the nine PPDUs, but feeds back channel sensing information of a PPDU included in each of the four PPDU sets (namely, four PPDUs). This reduces overheads.

Optionally, if "k" may be pre-configured or pre-stored in the second apparatus, for example, "k" is 3, due to a limitation of "k", in this possible implementation, the second apparatus determines that the quantity x of PPDU sets, of the nine PPDUs, that meet a condition that a change of CSI corresponding to PPDUs included in adjacent PPDU sets is greater than the first threshold is 4. However, the second frame fed back by the second apparatus in step S200 includes channel sensing information corresponding to three PPDUs, instead of channel sensing information corresponding to the four PPDUs. The "three PPDUs" may be first three PPDUs in the "four PPDUs", the "three PPDUs" may be last three PPDUs in the "four PPDUs", or the "three PPDUs" may be any three PPDUs in the "four PPDUs". This is not limited herein.

Optionally, that the m PPDUs included in the part of or all of the PPDUs are respectively located in m PPDU sets of the n PPDUs includes that the m PPDUs included in the part of or all of the PPDUs are respectively first PPDUs in m PPDU sets of the n PPDUs. In the example in which the second frame fed back by the second apparatus in step S200 includes the channel sensing information corresponding to the four PPDU sets, the second frame fed back by the second apparatus includes channel sensing information corresponding to the PPDU 1, the PPDU 2, the PPDU 4, and the PPDU 7.

Optionally, that the m PPDUs included in the part of or all of the PPDUs are respectively located in m PPDU sets of the n PPDUs includes that the m PPDUs included in the part of or all of the PPDUs are respectively last PPDUs in m PPDU sets of the n PPDUs. In the example in which the second frame fed back by the second apparatus in step S200 includes the channel sensing information corresponding to the four PPDU sets, the second frame fed back by the second apparatus includes channel sensing information corresponding to the PPDU 1, the PPDU 3, the PPDU 6, and the PPDU 9.

In a possible implementation, that change information between CSI corresponding to a PPDU in the first PPDU set and CSI corresponding to a PPDU in the second PPDU set is greater than a first threshold includes: change information between CSI corresponding to any PPDU in the first PPDU set and CSI corresponding to any PPDU in the second PPDU set is greater than the first threshold.

In the example in which the second frame fed back by the second apparatus in step S200 includes the channel sensing information corresponding to the four PPDU sets, change information between CSI corresponding to any PPDUs of adjacent sets in the four PPDU sets is greater than the first threshold.

For example, for the first PPDU set and the second PPDU set that are adjacent to each other, that change information between CSI corresponding to any PPDU in the first PPDU set and CSI corresponding to any PPDU in the second PPDU set is greater than the first threshold meets:
change information between CSI corresponding to the PPDU 1 and CSI corresponding to the PPDU 2 is greater than the first threshold; and
change information between the CSI corresponding to the PPDU 1 and CSI corresponding to the PPDU 3 is greater than the first threshold.

For another example, for the second PPDU set and the third PPDU set that are adjacent to each other, that change information between CSI corresponding to any PPDU in the second PPDU set and CSI corresponding to any PPDU in the third PPDU set is greater than the first threshold meets:
change information between CSI corresponding to the PPDU 2 and CSI corresponding to the PPDU 4 is greater than the first threshold;
change information between the CSI corresponding to the PPDU 2 and CSI corresponding to the PPDU 5 is greater than the first threshold;
change information between the CSI corresponding to the PPDU 2 and CSI corresponding to the PPDU 6 is greater than the first threshold;
change information between CSI corresponding to the PPDU 3 and the CSI corresponding to the PPDU 4 is greater than the first threshold;
change information between the CSI corresponding to the PPDU 3 and the CSI corresponding to the PPDU 5 is greater than the first threshold; and
change information between the CSI corresponding to the PPDU 3 and CSI corresponding to the PPDU 6 is greater than the first threshold.

In another possible implementation, that change information between CSI corresponding to a PPDU in the first PPDU set and CSI corresponding to a PPDU in the second PPDU set is greater than a first threshold includes: change information between CSI corresponding to one PPDU in the first PPDU set and CSI corresponding to one PPDU in the second PPDU set is greater than the first threshold.

In the example in which the second frame fed back by the second apparatus in step S200 includes the channel sensing information corresponding to the four PPDU sets, change information between CSI corresponding to PPDUs in adjacent sets in the four PPDU sets is greater than the first threshold.

For example, for the first PPDU set and the second PPDU set that are adjacent to each other, change information between CSI corresponding to one PPDU in the first PPDU set and CSI corresponding to one PPDU in the second PPDU set is greater than the first threshold meets:
change information between CSI corresponding to the PPDU 1 and CSI corresponding to the PPDU 2 is greater than the first threshold; and
change information between the CSI corresponding to the PPDU 1 and CSI corresponding to the PPDU 3 is greater than the first threshold.

For another example, for the second PPDU set and the third PPDU set that are adjacent to each other, that change information between CSI corresponding to one PPDU in the second PPDU set and CSI corresponding to one PPDU in the third PPDU set is greater than the first threshold meets:
change information between CSI corresponding to the PPDU 2 and CSI corresponding to the PPDU 4 is greater than the first threshold;
change information between the CSI corresponding to the PPDU 2 and CSI corresponding to the PPDU 5 is greater than the first threshold;
change information between the CSI corresponding to the PPDU 2 and CSI corresponding to the PPDU 6 is greater than the first threshold;
change information between CSI corresponding to the PPDU 3 and the CSI corresponding to the PPDU 4 is greater than the first threshold;
change information between the CSI corresponding to the PPDU 3 and the CSI corresponding to the PPDU 5 is greater than the first threshold; and
change information between the CSI corresponding to the PPDU 3 and CSI corresponding to the PPDU 6 is greater than the first threshold.

In a possible implementation, change information between CSI corresponding to at least two PPDUs included in the first PPDU set (or any PPDU set in the m PPDU sets) is less than a second threshold. Specifically, the channel sensing information included in the second frame is determined based on the m PPDUs. In other words, the second frame includes channel sensing information corresponding to the m PPDUs. The m PPDUs are respectively located in the m PPDU sets of the n PPDUs, and for any PPDU set (for example, the first PPDU set) of the m PPDU sets, when the PPDU set includes at least two PPDUs, change information between CSI corresponding to the at least two PPDUs is less than the second threshold.

In other words, the channel sensing information included in the second frame corresponds to PPDUs in adjacent PPDU sets whose CSI changes greater. Therefore, the second apparatus does not need to feed back channel sensing information corresponding to all PPDUs included in each of the m PPDU sets, thereby saving overheads.

In the example in which the second frame fed back by the second apparatus in step S200 includes the channel sensing information corresponding to the four PPDU sets, that change information between at least two pieces of CSI corresponding to any PPDU set in the four PPDU sets is less than the second threshold meets:
change information between CSI corresponding to the PPDU 2 and CSI corresponding to the PPDU 3 included in the second PPDU set is less than the second threshold;
change information between CSI corresponding to the PPDU 4, CSI corresponding to the PPDU 5, and CSI corresponding to the PPDU 6 included in the third PPDU set is less than the second threshold; and
change information between CSI corresponding to the PPDU 7, CSI corresponding to the PPDU 8, and CSI corresponding to the PPDU 9 included in the fourth PPDU set is less than the second threshold.

Optionally, in at least two PPDUs included in any PPDU set of the m PPDU sets, change information between CSI corresponding to two adjacent PPDUs is less than a second threshold.

In the example in which the second frame fed back by the second apparatus in step S200 includes the channel sensing information corresponding to the four PPDU sets, that change information between at least two pieces of CSI corresponding to two adjacent PPDUs in any PPDU set in the four PPDU sets is less than the second threshold meets:
change information between CSI corresponding to the PPDU 2 and CSI corresponding to the PPDU 3 included in the second PPDU set is less than the second threshold;
change information between CSI corresponding to the PPDU 4 and CSI corresponding to the PPDU 5 included in the third PPDU set is less than the second threshold;
change information between CSI corresponding to the PPDU 5 and CSI corresponding to the PPDU 6 included in the third PPDU set is less than the second threshold;
change information between CSI corresponding to the PPDU 7 and CSI corresponding to the PPDU 8 included in the fourth PPDU set is less than the second threshold; and
change information between CSI corresponding to the PPDU 8 and CSI corresponding to the PPDU 9 included in the fourth PPDU set is less than the second threshold.

It should be noted that, in embodiments of this application, an association relationship between the first threshold and the second threshold is not limited. For example, the first threshold may be equal to the second threshold, or the first threshold may be greater than the second threshold.

Optionally, when the first threshold is equal to the second threshold, an implementation example of "in at least two PPDUs included in any PPDU set of the m PPDU sets, change information between CSI corresponding to two adjacent PPDUs is less than a second threshold" may alternatively be expressed as follows: In the example in which the second frame fed back by the second apparatus in step S200 includes the channel sensing information corresponding to the four PPDU sets, that in any PPDU set of the four PPDU sets, change information between at least two pieces of CSI corresponding to two adjacent PPDUs is less than the first threshold meets:
change information between CSI corresponding to a last PPDU (namely, the PPDU 1) included in the first PPDU set and CSI corresponding to a first PPDU (namely, the PPDU 2) included in the second PPDU set is greater than the first threshold;
change information between CSI corresponding to the PPDU 2 and CSI corresponding to the PPDU 3 included in the second PPDU set is less than the first threshold;
change information between the CSI corresponding to a last PPDU (namely, the PPDU 3) included in the second PPDU set and CSI corresponding to a first PPDU (namely, a PPDU 4) included in the third PPDU set is greater than the first threshold;
change information between the CSI corresponding to the PPDU 4 and CSI corresponding to the PPDU 5 included in the third PPDU set is less than the first threshold;
change information between the CSI corresponding to the PPDU 5 and CSI corresponding to the PPDU 6 included in the third PPDU set is less than the first threshold;
change information between CSI corresponding to the last PPDU (namely, the PPDU 6) included in the third PPDU set and CSI corresponding to a first PPDU (namely, the PPDU 7) included in the fourth PPDU set is greater than the first threshold;
change information between the CSI corresponding to the PPDU 7 and CSI corresponding to the PPDU 8 included in the fourth PPDU set is less than the first threshold; and
change information between the CSI corresponding to the PPDU 8 and CSI corresponding to a PPDU 9 included in the fourth PPDU set is less than the first threshold.

It can be learned from the foregoing content that, after the first apparatus receives the first frame from the second apparatus in step S 100, and the first apparatus receives the n PPDUs from the second apparatus, when m is less than n, the first apparatus sends the channel sensing information corresponding to some of the n PPDUs to the second apparatus in step S200; or when m is equal to n, the first apparatus sends the channel sensing information corresponding to all of the n PPDUs to the second apparatus in step S200.

In a possible implementation, the channel sensing information included in the second frame includes at least one of the following: channel state information (channel state information, CSI), a multiple input multiple output (multiple input multiple output, MIMO) parameter of CSI, an identifier of a PPDU corresponding to CSI, or address information of the part of or all of the PPDUs. Specifically, the channel sensing information between the first apparatus and the second apparatus included in the second frame sent by the second apparatus can specifically include at least one piece of the foregoing information, so as to indicate, to the first apparatus, one or more types of information corresponding to the channel sensing information.

For example, CSI included in the channel sensing information may indicate a channel status of a channel between the first apparatus and the second apparatus, so that the first apparatus knows the channel status. A MIMO parameter of CSI included in the channel sensing information may indicate a MIMO parameter of a signal transmitted between the first apparatus and the second apparatus, so that the first apparatus knows the MIMO parameter of the signal. An identifier of a PPDU corresponding to CSI included in the channel sensing information may indicate a PPDU corresponding to CSI included in the channel sensing information, so that the first apparatus knows the PPDU corresponding to the CSI. Address information of the part of or all of the PPDUs included in the channel sensing information may indicate that the channel sensing information is determined based on a PPDU corresponding to the address information, so that the first apparatus knows that the channel sensing information is determined based on the PPDU corresponding to the address information.

Optionally, because the second frame mainly includes the channel sensing information, the second frame may also be named a sensing feedback (Sensing Feedback) frame. It is apparent that the naming is merely an example, and the second frame may alternatively be named another name. This is not limited in this application.

Optionally, the second frame may be a management frame, a data frame, or a control frame. This is not limited herein.

Descriptions are provided below by using an implementation example in which the second frame is an action (Action) frame. An indication of the second frame is added to a reserved (Reserved) bit in a public action (Public Action) field in the action frame.

Optionally, in the following example, although the second frame uses an implementation of a new frame, the second frame may also be designed based on an original frame, for example, a beacon frame or another frame carries related information of the second frame.

Optionally, a value of the reserved (Reserved) bit may be any one of 34 to 255.

Descriptions are provided below in Table 2 by using an example in which the value of the reserved (Reserved) bit is 36 and the second frame is named a sensing feedback frame.

**Table 2**

| Public action field values (Public Action field values) | Description (Description) |
|---|---|
| 0 | 20/40 basic service set coexistence management (20/40 BSS Coexistence Management) |
| 1 to... | ... |
| 33 | Fine timing measurement (Fine Timing Measurement) |
| 34 to... | ... |
| 36 | Sensing Feedback |
| 37 to 255 | Reserved (Reserved) |

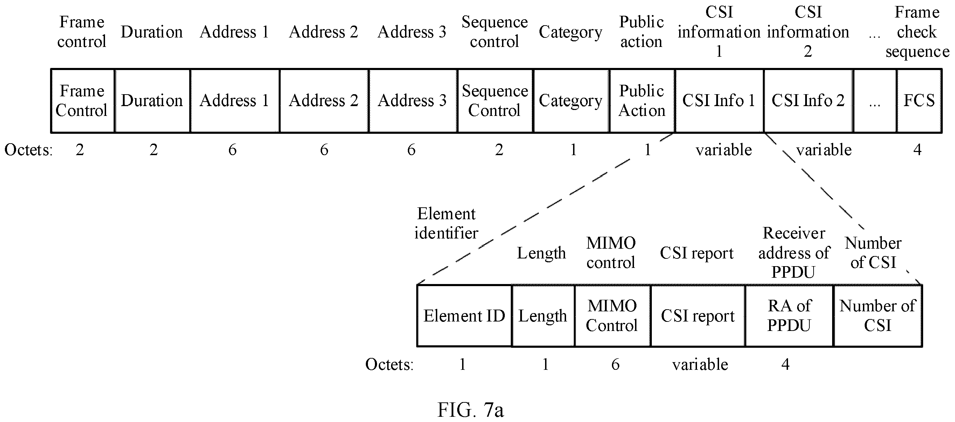

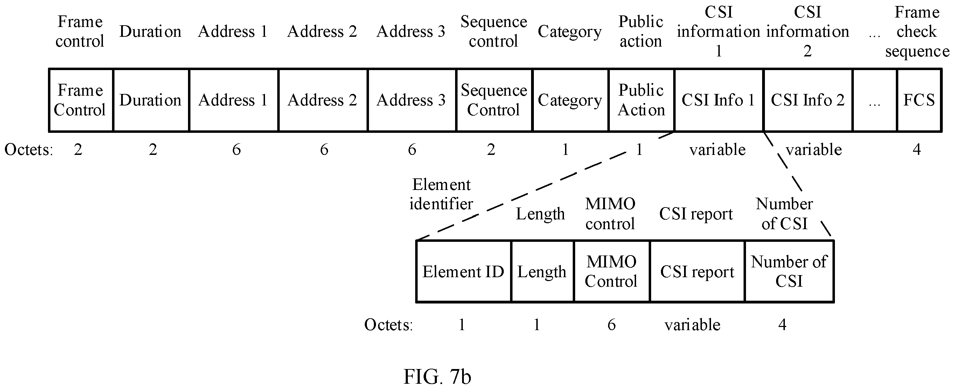

Optionally, a frame format of the second frame may be implemented in a manner shown in FIG. 7a or FIG. 7b.

As shown in FIG. 7a, the second frame includes the following fields:
frame control (Frame Control), duration (Duration), address 1 (Address 1), address 2 (Address 2), address 3 (Address 3), sequence control (Sequence Control), category (Category), public action (Public Action), one or more pieces of channel sensing information (denoted as CSI Info 1, CSI Info 2, ...), and frame check sequence (frame check sequence, FCS).

Optionally, in each piece of channel sensing information in the one or more pieces of channel sensing information (denoted as CSI Info 1, CSI Info 2...), in FIG. 7a, descriptions are provided by using CSI Info 1 as an example. As shown in FIG. 7a, CSI Info 1 includes the following fields:
element identifier (Element ID), length (Length), MIMO control (MIMO Control), CSI report (CSI report), receiver address of PPDU (RA of PPDU), and number of CSI (Number of CSI). The "CSI report" field is used to carry the channel state information (channel state information, CSI), the "MIMO control" field is used to carry the multiple input multiple output (multiple input multiple output, MIMO) parameter of the CSI, the "number of the CSI" field is used to carry the identifier of the PPDU corresponding to the CSI, and the "receiver address of the PPDU" field is used to carry the address information of the part of or all of the PPDUs.

It should be noted that CSI corresponding to different PPDUs in embodiments of this application may be distinguished by using numbers, serial numbers, sequence numbers (Sequence Numbers), or another manner. In embodiments, descriptions are provided by using an example of only the "number of the CSI".

As shown in FIG. 7b, in each piece of channel sensing information in one or more pieces of channel sensing information (denoted as CSI Info 1, CSI Info 2...), in FIG. 7b, descriptions are provided by using CSI Info 1 as an example. Compared with that in FIG. 7a, as shown in FIG. 7b, CSI Info 1 does not include a "receiver address of PPDU" field.

It should be understood that in the frame format shown in FIG. 7a or FIG. 7b, values of quantities of octets (or quantities of bits) of different fields and an order of the different fields are not limited in this application. Values of quantities of octets (or quantities of bits) of different fields in the frame format shown in FIG. 7a or FIG. 7b and an order of the different fields are merely an implementation example. The values of quantities of octets (or quantities of bits) of the different fields in the frame format shown in FIG. 7a or FIG. 7b may alternatively be other values, and the order of the different fields in the frame format shown in FIG. 7a or FIG. 7b may alternatively be another field order. This is not limited herein. In addition, the different fields in the frame format shown in FIG. 7a or FIG. 7b may be independently implemented.

In a possible implementation, at least one of the n PPDUs sent by the first apparatus is used for communication between the first apparatus and a third apparatus.

It should be noted that, that at least one of the n PPDUs is used for communication between the first apparatus and a third apparatus includes that at least one of the n PPDUs is used for at least one communication process such as data exchange, signaling transmission, or sensing (for example, sensing session setup, measurement setup, measurement instance, measurement setup termination, and sensing session termination) between the first apparatus and a third apparatus.

Specifically, the channel sensing information between the first apparatus and the second apparatus is determined based on the part of or all of the n PPDUs. Because the second apparatus is different from the third apparatus and the at least one of the n PPDUs is used for communication between the first apparatus and the third apparatus, a PPDU used for communication by another apparatus is reused in a process of determining the channel sensing information between the first apparatus and the second apparatus. Therefore, the channel sensing procedure between the first apparatus and the second apparatus can be implemented while communication requirements of the first apparatus and the third apparatus are met, thereby improving communication efficiency of the WLAN system and reducing overheads.

In another possible implementation, the n PPDUs meet at least one of the following:
a receiver address field of the at least one of the n PPDUs indicates the third apparatus;
a receiver address field of the at least one of the n PPDUs indicates the second apparatus; or
the at least one of the n PPDUs is a PPDU sent through broadcast.

The "receiver address field" indicates the third apparatus (or the second apparatus). It should be noted that in embodiments of this application, the third apparatus (or the second apparatus) may alternatively be indicated by using other information, for example, an AID, or a station-identifier (STA-ID). This is not limited herein.

Optionally, that a receiver address field of the at least one of the n PPDUs indicates the third apparatus may indicate that the at least one of the n PPDUs is used for communication between the first apparatus and the third apparatus. In other words, that a receiver address field of the at least one of the n PPDUs indicates the third apparatus includes that the at least one of the n PPDUs is used for at least one communication process such as data exchange, signaling transmission, or sensing (for example, sensing session setup, measurement setup, measurement instance, measurement setup termination, and sensing session termination) between the first apparatus and the third apparatus.

Optionally, that a receiver address field of the at least one of the n PPDUs indicates the second apparatus may indicate that the at least one of the n PPDUs is used for communication between the first apparatus and the second apparatus. In other words, that a receiver address field of the at least one of the n PPDUs indicates the second apparatus includes that the at least one of the n PPDUs is used for at least one communication process such as data exchange, signaling transmission, or sensing (for example, sensing session setup, measurement setup, measurement instance, measurement setup termination, and sensing session termination) between the first apparatus and the second apparatus.

Optionally, that the at least one of the n PPDUs is a PPDU sent through broadcast may indicate that the at least one of the n PPDUs is used for communication between the first apparatus and at least two apparatuses. In other words, that the at least one of the n PPDUs is a PPDU sent through broadcast includes that the at least one of the n PPDUs is used for at least one communication process such as data exchange, signaling transmission, or sensing (for example, sensing session setup, measurement setup, measurement instance, measurement setup termination, and sensing session termination) between the first apparatus and at least two apparatuses.

Specifically, the channel sensing information between the first apparatus and the second apparatus is determined based on the part of or all of the n PPDUs. Because a receiver address field of the at least one of the n PPDUs indicates the third apparatus, that is, the at least one of the n PPDUs is used for communication between the first apparatus and the third apparatus (or a receiver address field of the at least one of the n PPDUs indicates the second apparatus, that is, the at least one of the n PPDUs is used for communication between the first apparatus and the second apparatus; or the at least one of the n PPDUs is a PPDU sent through broadcast, that is, is used for broadcast communication of the first apparatus), a PPDU used for communication is reused in a process of determining the channel sensing information between the first apparatus and the second apparatus. Therefore, the channel sensing procedure between the first apparatus and the second apparatus can be implemented while the communication requirement of the first apparatus is met, thereby improving communication efficiency of the WLAN system and reducing overheads.

Based on the solution shown in FIG. 6, after the first apparatus sends, to the second apparatus, the first frame used to request channel sensing in step S 100, the second apparatus can perform channel sensing based on the n PPDUs sent by the first apparatus, and determine channel sensing information transmitted between the first apparatus and the second apparatus for the part of or all of the n PPDUs. Then, the first apparatus receives the second frame including the channel sensing information from the second apparatus in step S200, and implements the channel sensing procedure. Therefore, based on the n PPDUs sent by the first apparatus, a channel sensing procedure between different apparatuses can be implemented while the communication requirement of the first apparatus is met, thereby improving communication efficiency of the WLAN system and reducing overheads.

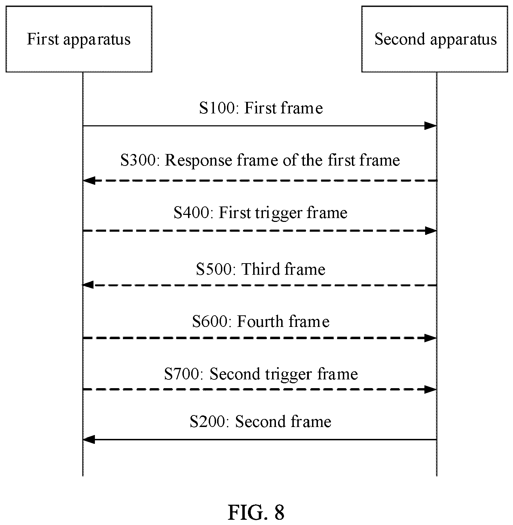

FIG. 8 is another schematic diagram of a communication method according to this application. Compared with that in the implementation process shown in FIG. 6, in an implementation process shown in FIG. 8, after a second apparatus receives a first frame in step S 100, the second apparatus may further perform another implementation process.

In a possible implementation, as shown in FIG. 8, before a first apparatus receives a second frame from the second apparatus in step S200, the method further includes:

S300: The first apparatus receives a response frame of the first frame from the second apparatus.

In embodiments, the second apparatus sends the response frame of the first frame in step S300, and correspondingly, the first apparatus receives the response frame of the first frame in step S300. The response frame of the first frame indicates whether the second apparatus agrees to channel sensing; or the response frame of the first frame indicates whether the second apparatus receives the first frame.

Specifically, after the first apparatus sends, to the second apparatus, the first frame used to request channel sensing, the second apparatus can send, based on the first frame, the response frame of the first frame to the first apparatus, so that the first apparatus knows, based on the response frame of the first frame, whether the first apparatus agrees to channel sensing (or knows whether the first apparatus receives the first frame).

In a possible implementation, the first frame sent and received in step S 100 includes at least one of the following: start moment information of channel sensing, duration information of channel sensing, frequency band information of channel sensing, indication information indicating whether to feed back a change of CSI, or address information of a PPDU for channel sensing. Specifically, the first frame used to request channel sensing sent by the first apparatus can include at least one piece of the foregoing information, so as to indicate one or more types of information corresponding to requested channel sensing to the first apparatus.

For example, start moment information of channel sensing included in the first frame indicates a start moment of channel sensing, so that the second apparatus knows when to start performing channel sensing. Duration information of channel sensing included in the first frame indicates duration of channel sensing, so that the second apparatus knows duration of performing the channel sensing. Frequency band information of channel sensing included in the first frame indicates a frequency band for channel sensing, so that the second apparatus knows a frequency band of a PPDU used for channel sensing. Indication information, indicating whether to feed back a change of CSI, included in the first frame is used to enable the second apparatus to know duration of performing channel sensing. Address information of a PPDU for channel sensing included in the first frame indicates address information of a PPDU used for channel sensing, so that the second apparatus knows the address information of the PPDU used for channel sensing thereby avoiding confusion.

Optionally, the first frame may be a management frame, a data frame, or a control frame. This is not limited herein. Similarly, the response frame of the first frame may also be a management frame, a data frame, or a control frame. This is not limited herein.

Optionally, in the following example, although the first frame and the response frame of the first frame use implementations of new frames, the first frame and the response frame of the first frame may also be designed based on original frames, for example, beacon frames or other frames carry related information of the first frame and the response frame of the first frame.

In a possible implementation, both the first frame sent and received in step S100 and the response frame of the first frame sent and received in step S300 are management frames; and a value of a subtype field in a frame control field in the first frame is 0111, and a value of a subtype field in the response frame of the first frame is 1111; or a value of a subtype field in a frame control field in the first frame is 1111, and a value of a subtype field in the response frame of the first frame is 0111.

Optionally, because the first frame is mainly used to request channel sensing, the first frame may also be named a sensing request (Sensing Request) frame, and correspondingly, the response frame of the first frame may be named a sensing response (Sensing Response) frame. It is apparent that the naming is merely an example, and the first frame and the response frame of the first frame may alternatively be named other names. This is not limited in this application.

For ease of description, descriptions are provided below by using the first frame named a sensing request frame, and the response frame of the first frame named a sensing response frame.

For example, two new management frames: the sensing request frame and the sensing response frame are designed. For example, the sensing request frame and the sensing response frame are added to a reserved (Reserved) bit in a subtype field in a frame control field. The sensing request frame is used to initiate a sensing session and request the second apparatus to listen to a PPDU sent by the first apparatus to a specified apparatus, for sensing measurement. After listening to the sensing request frame, the second apparatus returns the sensing response frame to indicate whether to join the sensing session.

Optionally, descriptions are provided below by using Table 3 as an example. In Table 3, a value of a subtype field in a frame control field in the first frame is 0111, and a value of a subtype field in the response frame of the first frame is 1111.

**Table 3**

| Subtype values (Subtype values) | Subtype description (Subtype description) |
|---|---|
| 0000 | Association request (Association Request) |
| 0001 | Association response (Association Response) |
| 0010 | Reassociation request (Reassociation Request) |
| 0011 | Reassociation response (Reassociation Response) |
| 0100 | Probe request (Probe Request) |
| 0101 | Probe response (Probe Response) |
| 0110 | Timing advertisement (Timing Advertisement) |
| 0111 | Sensing request (Sensing request) |
| 1000 | Beacon (Beacon) |
| 1001 | Announcement traffic indication message (ATIM) |
| 1010 | Disassociation (Disassociation) |
| 1011 | Authentication (Authentication) |
| 1100 | Deauthentication (Deauthentication) |
| 1101 | Action (Action) frame |
| 1110 | Action frame no acknowledgment (Action No Ack) |
| 1111 | Sensing response (Sensing Response) |

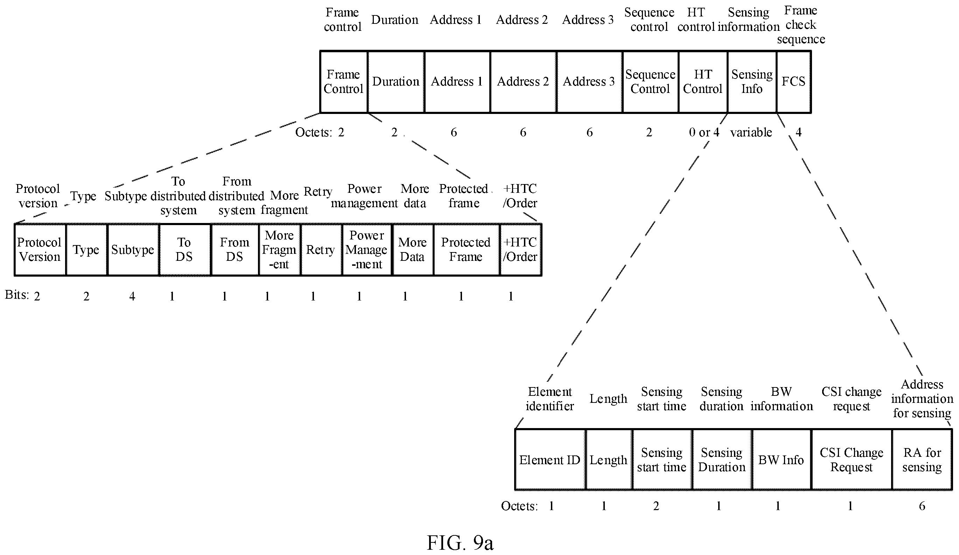

Optionally, when the first frame is a management frame, the first frame may be implemented in a manner shown in FIG. 9a.

As shown in FIG. 9a, the first frame includes the following fields:
frame control (Frame Control), duration (Duration), address 1 (Address 1), address 2 (Address 2), address 3 (Address 3), sequence control (Sequence Control), high throughput control (HT Control), sensing information (Sensing Info), and frame check sequence (frame check sequence, FCS).

Optionally, as shown in FIG. 9a, the frame control (Frame Control) field includes the following fields:
protocol version (Protocol Version), type (Type), subtype (Subtype), to distributed system (To DS), from distributed system (From DS), more fragment (More Fragment), retry (Retry), power management (Power Management), more data (More Data), protected frame (Protected Frame), and +HTC/order (+HTC/order).

Optionally, as shown in FIG. 9a, the sensing information (Sensing Info) field includes the following fields:
element identifier (Element ID), length (Length), sensing start time (Sensing start time), sensing duration (Sensing Duration), bandwidth information (BW Info), CSI change request (CSI Change Request), and address information for sensing (RA for sensing). The "sensing start time" field is used to carry the start moment information of channel sensing, the "sensing duration" field is used to carry the duration information of channel sensing, the "bandwidth information" field is used to carry the frequency band information of channel sensing, the "CSI change request" field is used to carry the indication information indicating whether to feed back the change of the CSI, and the "address information for sensing" field is used to carry the address information of the PPDU for channel sensing.

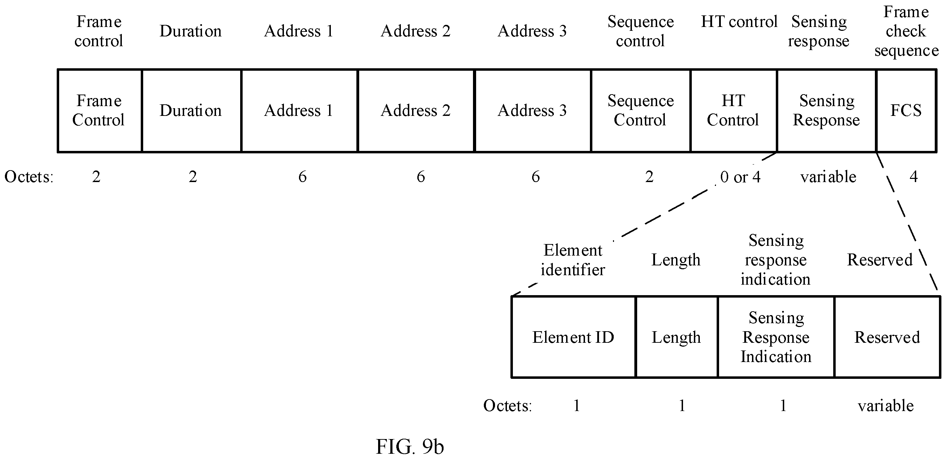

Optionally, when the response frame of the first frame is a management frame, a frame format of the first frame may be implemented in a manner shown in FIG. 9b.

As shown in FIG. 9b, the response frame of the first frame includes the following fields:
frame control (Frame Control), duration (Duration), address 1 (Address 1), address 2 (Address 2), address 3 (Address 3), sequence control (Sequence Control), high throughput control (HT Control), sensing response (Sensing Response), and frame check sequence (frame check sequence, FCS).

Optionally, as shown in FIG. 9b, the sensing response (Sensing Response) field includes the following fields:
element identifier (Element ID), length (Length), sensing response indication (Sensing Response Indication), and reserved (Reserved). The "sensing response indication" field is used to carry the indication information indicating whether the second apparatus agrees to channel sensing; or the "sensing response indication" field is used to carry the indication information indicating whether the second apparatus receives the first frame.

It should be understood that in the frame format shown in FIG. 9a or FIG. 9b, values of quantities of octets (or quantities of bits) of different fields and an order of the different fields are not limited in this application. Values of quantities of octets (or quantities of bits) of different fields in the frame format shown in FIG. 9a or FIG. 9b and an order of the different fields are merely an implementation example. The values of quantities of octets (or quantities of bits) of the different fields in the frame format shown in FIG. 9a or FIG. 9b may alternatively be other values, and the order of the different fields in the frame format shown in FIG. 9a or FIG. 9b may alternatively be another field order. This is not limited herein. In addition, the different fields in the frame format shown in FIG. 9a or FIG. 9b may be independently implemented.

In a possible implementation, both the first frame sent and received in step S 100 and the response frame of the first frame sent and received in step S300 are action frames; and a value of a public action field in the first frame is any one of 34 to 255, and a value of a public action field in the response frame of the first frame is any one of 34 to 255.

For example, two new action frames: a sensing request frame and a sensing response frame are designed. The sensing request frame and the sensing response frame are added to a reserved (Reserved) bit in a public action field. The sensing request frame is used to initiate a sensing session and request the second apparatus to listen to a PPDU sent by the first apparatus to a specified apparatus, for sensing measurement. After listening to the sensing request frame, the second apparatus returns the sensing response frame to indicate whether to join the sensing session.

Optionally, descriptions are provided below by using Table 4 as an example. In Table 4, a value of a public action field in the first frame is 34 of 34 to 255, and a value of a public action field in the response frame of the first frame is 35 of 34 to 255.

**Table 4**

| Public action field values (Public Action field values) | Description (Description) |
|---|---|
| 0 | 20/40 basic service set coexistence management (20/40 BSS Coexistence Management) |
| 1 to... | ... |
| 33 | Fine timing measurement (Fine Timing Measurement) |
| 34 | Sensing request (Sensing request) |
| 35 | Sensing response (Sensing Response) |
| 36 to 255 | Reserved (Reserved) |

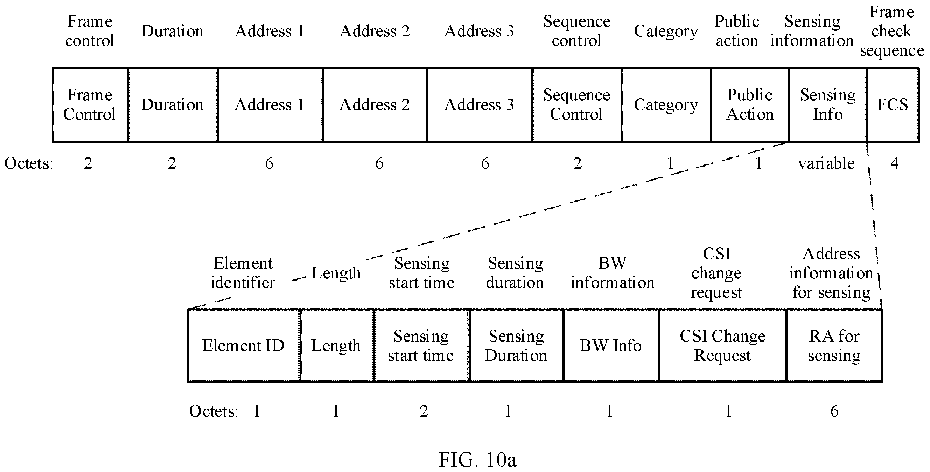

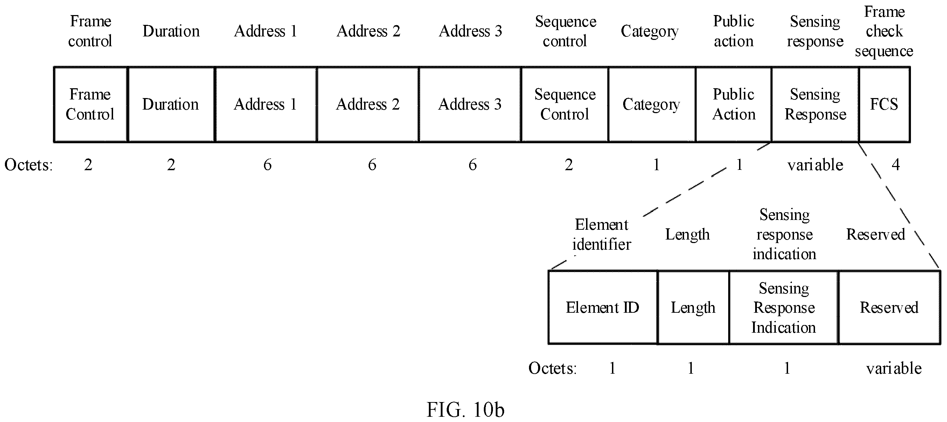

Optionally, when both the first frame and the response frame of the first frame are action frames, the first frame and the response frame of the first frame may be separately implemented in manners shown in FIG. 10a and FIG. 10b.

As shown in FIG. 10a, the first frame includes the following fields:
frame control (Frame Control), duration (Duration), address 1 (Address 1), address 2 (Address 2), address 3 (Address 3), sequence control (Sequence Control), category (Category), public action (Public Action), sensing information (Sensing Info), and frame check sequence (frame check sequence, FCS).

Optionally, sensing information (Sensing Info) includes the following fields:
element identifier (Element ID), length (Length), sensing start time (Sensing start time), sensing duration (Sensing Duration), bandwidth information (BW Info), CSI change request (CSI Change Request), and address information for sensing (RA for sensing). The "sensing start time" field is used to carry the start moment information of channel sensing, the "sensing duration" field is used to carry the duration information of channel sensing, the "bandwidth information" field is used to carry the frequency band information of channel sensing, the "CSI change request" field is used to carry the indication information indicating whether to feed back the change of the CSI, and the "address information for sensing" field is used to carry the address information of the PPDU for channel sensing.

As shown in FIG. 10b, the response frame of the first frame includes the following fields:
frame control (Frame Control), duration (Duration), address 1 (Address 1), address 2 (Address 2), address 3 (Address 3), sequence control (Sequence Control), category (Category), public action (Public Action), sensing response (Sensing Response), and frame check sequence (frame check sequence, FCS).

Optionally, sensing response (Sensing Response) includes the following fields:
element identifier (Element ID), length (Length), sensing response indication (Sensing Response Indication), and reserved (Reserved). The "sensing response indication" field is used to carry the indication information indicating whether the second apparatus agrees to channel sensing; or the "sensing response indication" field is used to carry the indication information indicating whether the second apparatus receives the first frame.

It should be understood that in the frame format shown in FIG. 10a or FIG. 10b, values of quantities of octets (or quantities of bits) of different fields and an order of the different fields are not limited in this application. Values of quantities of octets (or quantities of bits) of different fields in the frame format shown in FIG. 10 or FIG. 10b and an order of the different fields are merely an implementation example. The values of quantities of octets (or quantities of bits) of the different fields in the frame format shown in FIG. 10a or FIG. 10b may alternatively be other values, and the order of the different fields in the frame format shown in FIG. 10a or FIG. 10b may alternatively be another field order. This is not limited herein. In addition, the different fields in the frame format shown in FIG. 10a or FIG. 10b may be independently implemented.

In a possible implementation, as shown in FIG. 8, after the first apparatus sends the first frame to the second apparatus in step S100, the method further includes:
S500: The first apparatus receives a third frame from the second apparatus.

In embodiments, the second apparatus sends the third frame in step S500, and correspondingly, the first apparatus receives the third frame in step S500. The third frame includes channel change information between the first apparatus and the second apparatus, and the channel change information is determined based on the n PPDUs.

Specifically, after the first apparatus sends, to the second apparatus, the first frame used to request channel sensing, the first apparatus receives, from the second apparatus, the third frame including the channel change information between the first apparatus and the second apparatus, so that the first apparatus knows a change of a channel between the first apparatus and the second apparatus.

Optionally, the first apparatus may determine, based on the channel change information included in the third frame, a change of an environment between the first apparatus and the second apparatus, for example, movement of an object between the first apparatus and the second apparatus, or a gesture motion of a user between the first apparatus and the second apparatus.

Optionally, when the channel change information included in the third frame indicates that the channel between the first apparatus and the second apparatus does not change (or the change is less than a third threshold), the first apparatus does not need to receive the second frame. In other words, the second apparatus does not need to send the second frame.

Optionally, the channel change information and the channel sensing information may be carried in a same frame. For example, both the channel change information and the channel sensing information are carried in a second frame, or both the channel change information and the channel sensing information are carried in a third frame.

In a possible implementation, before the first apparatus receives the third frame from the second apparatus in step S500, the method further includes:
S400: The first apparatus sends a first trigger frame to the second apparatus.

In embodiments, the first apparatus sends the first trigger frame in step S400, and correspondingly, the second apparatus receives the first trigger frame in step S400. The first trigger frame includes resource unit (resource unit, RU) information carrying the channel change information, and the RU information carrying the channel change information indicates an RU corresponding to the second apparatus, or the RU information carrying the channel change information indicates an RU for random access.

In a possible implementation, step S400 is optional. For example, when step S400 is not performed, the third frame is carried in an RU for contention-based channel access.

Specifically, the first apparatus (and/or the second apparatus) can determine, in a plurality of manners, the RU carrying the third frame. For example, the first apparatus (and/or the second apparatus) can determine, based on an indication of the first trigger frame, the RU carrying the third frame, so that the first apparatus and the second apparatus receive and send the third frame on the specified RU. For another example, the first apparatus (and/or the second apparatus) can use the RU used for random access as the RU carrying the third frame. This saves overheads, without an indication from the first apparatus, and the second apparatus can alternatively determine an occasion for sending the third frame (for example, sending the third frame only when the change indicated by the channel change information is large), thereby further saving overheads.

The following further describes the third frame sent and received in step S500.

Optionally, the third frame may be a management frame, a data frame, or a control frame. This is not limited herein.

In a possible implementation, the third frame sent and received in step S500 further includes at least one of the following: location change information of the second apparatus, or address information of the part of or all of the n PPDUs.

Specifically, the third frame including the channel change information between the first apparatus and the second apparatus can further include at least one piece of the foregoing information, so that the first apparatus knows, based on the third frame sent by the second apparatus, channel change related information.

For example, because a location change of the second apparatus may also cause the change of the channel between the first apparatus and the second apparatus, the location change information of the second apparatus included in the third frame indicates the location change of the second apparatus, so that the first apparatus knows the location change of the second apparatus, and further knows, based on the location change, whether the channel between the first apparatus and the second apparatus changes and a cause of the change of the channel. Address information of the part of or all of the n PPDUs included in the third frame indicates address information of a PPDU corresponding to the channel change information, so that the second apparatus knows the address information of the PPDU corresponding to the channel change information, thereby avoiding confusion.

Optionally, the channel change information included in the third frame may also be named a CSI change response element (CSI change response element). It is apparent that the naming is merely an example, and the third frame may alternatively be named another name. This is not limited in this application. For ease of description, descriptions are provided below by using the channel change information, included in the third frame, named a CSI change response element.

For example, a new field CSI change response element is designed to indicate whether CSI information measured through sensing changes. In addition, it is considered that there is a problem that the second apparatus may move in the sensing procedure, and if the second apparatus moves in the sensing procedure, the CSI information also changes, but the change is not caused by a change of an environment. Therefore, a STA location change field is added to indicate whether a location of the second apparatus changes. If the location of the second apparatus changes, the second apparatus may notify, in this manner, the first apparatus that the change of the CSI information is caused by the change of the location of the second apparatus.

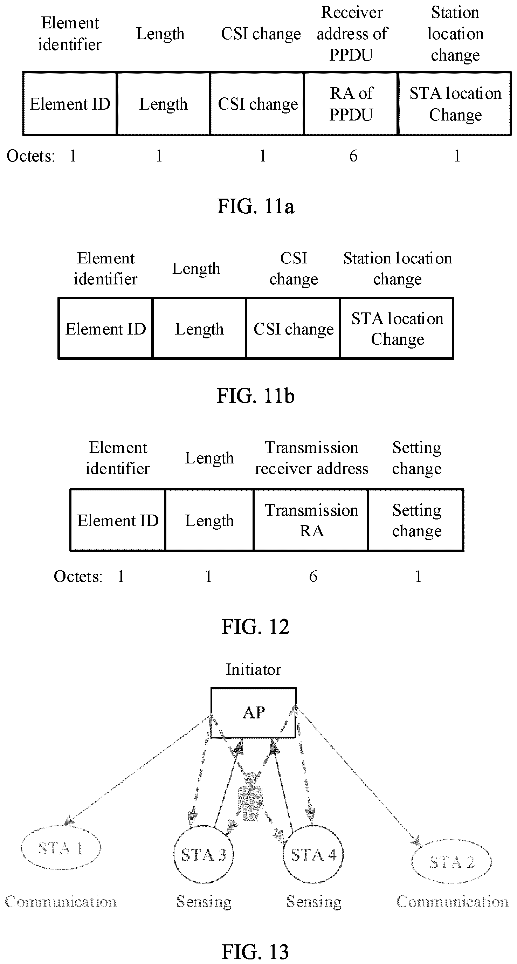

Optionally, a frame format of the CSI change response element included in the third frame may be implemented in a manner shown in FIG. 11a.

As shown in FIG. 11a, the third frame includes the following fields:
element identifier (Element ID), length (Length), CSI change (CSI change), address information for sensing (RA for sensing), station location change (STA location change), and receiver address of PPDU (RA of PPDU). The "CSI change" field is used to carry the channel change information, the "address information for sensing" field is used to carry the address information of the part of or all of the n PPDUs, the "station location change" field is used to carry the location change information of the second apparatus, and the "receiver address of PPDU" field is used to carry the address information of the part of or all of the PPDUs.

Optionally, a frame format of the CSI change response element included in the third frame may be implemented in a manner shown in FIG. 11b. As shown in FIG. 11b, compared with that in FIG. 11a, the frame format shown in FIG. 11b does not include a "receiver address of PPDU" field.

It should be understood that in the frame format shown in FIG. 11a or FIG. 11b, values of quantities of octets (or quantities of bits) of different fields and an order of the different fields are not limited in this application. Values of quantities of octets (or quantities of bits) of different fields in the frame format shown in FIG. 11a or FIG. 11b and an order of the different fields are merely an implementation example. The values of quantities of octets (or quantities of bits) of the different fields in the frame format shown in FIG. 11a or FIG. 11b may alternatively be other values, and the order of the different fields in the frame format shown in FIG. 11a or FIG. 11b may alternatively be another field order. This is not limited herein. In addition, the different fields in the frame format shown in FIG. 11a or FIG. 11b may be independently implemented.

In a possible implementation, before the first apparatus receives the second frame from the second apparatus in step S200, the method further includes:

S600: The first apparatus sends a fourth frame to the second apparatus.

In embodiments, the first apparatus sends the fourth frame in step S600, and correspondingly, the second apparatus receives the fourth frame in step S600. The fourth frame includes at least one of the following fields:
a first field, indicating whether beamforming or precoding exists,
a second field, indicating whether to change a transmit power,
a third field, indicating whether to change beamforming-precoding,
a fourth field, indicating a beamforming matrix-a precoding matrix,
a fifth field, indicating whether a transmit power changes, or
a sixth field, indicating a transmit power value.

Optionally, the fourth frame may be a management frame, a data frame, or a control frame. This is not limited herein.

Specifically, because a change of a transmit parameter of the first apparatus can also cause the change of the channel between the first apparatus and the second apparatus, information included in the fourth frame indicates the parameter change, so that the second apparatus knows the parameter change of the first apparatus, and further knows, based on the parameter change, whether the channel between the first apparatus and the second apparatus changes and a cause of the change of the channel.

Optionally, before the first apparatus receives the second frame from the second apparatus, the foregoing step S600 may be further expressed as that the first apparatus sends a fourth frame to the second apparatus, where the fourth frame includes change information of a transmit parameter of the first apparatus. The change information of the transmit parameter of the first apparatus includes at least one of the first field, the second field, the third field, and the fourth field.

Optionally, in a process in which the first apparatus sends the n PPDUs, the transmit parameter is not changed.

Optionally, the fourth frame mainly includes the change information of the transmit parameter. Therefore, the change information of the transmit parameter included in the fourth frame may be named a transmission setting change element (transmission setting change element). It is apparent that the naming is merely an example, and the third frame may alternatively be named another name. This is not limited in this application. For ease of description, descriptions are provided below by using the change information of the transmit parameter, included in the fourth frame, named a transmission setting change element.

For example, a new field transmission setting change element is designed to indicate whether transmission setting for the first apparatus to send a PPDU changes.

Optionally, a frame format of the change information, of the transmit parameter, included in the fourth frame may be implemented in a manner shown in FIG. 12.

As shown in FIG. 12, the fourth frame includes the following fields:
element identifier (Element ID), length (Length), transmission receiver address (Transmission RA), and setting change (Setting change). The "transmission receiver address" field is used to carry address information of a PPDU whose transmit parameter changes, and the "setting change" field is used to carry at least one of the first field, the second field, the third field, and the fourth field.

It should be understood that in the frame format shown in FIG. 12, values of quantities of octets (or quantities of bits) of different fields and an order of the different fields are not limited in this application. Values of quantities of octets (or quantities of bits) of different fields in the frame format shown in FIG. 12 and an order of the different fields are merely an implementation example. The values of quantities of octets (or quantities of bits) of the different fields in the frame format shown in FIG. 12 may alternatively be other values, and the order of the different fields in the frame format shown in FIG. 12 may alternatively be another field order. This is not limited herein. In addition, the different fields in the frame format shown in FIG. 12 may be independently implemented.

In a possible implementation, as shown in FIG. 8, before the first apparatus receives the second frame from the second apparatus in step S200, the method further includes:

S700: The first apparatus sends a second trigger frame to the second apparatus.

In embodiments, the first apparatus sends the first trigger frame in step S700, and correspondingly, the second apparatus receives the first trigger frame in step S700. The second trigger frame includes RU information carrying channel sensing information, and the RU information carrying the channel sensing information indicates an RU corresponding to the second apparatus, or the RU information carrying the channel sensing information indicates an RU for contention access.

In a possible implementation, step S700 is optional. For example, when step S700 is not performed, the second frame is carried in an RU for contention-based channel access.

Specifically, the first apparatus (and/or the second apparatus) can determine, in a plurality of manners, the RU carrying the second frame. For example, the first apparatus (and/or the second apparatus) can determine, based on an indication of the second trigger frame, the RU carrying the second frame, so that the first apparatus and the second apparatus receive and send the second frame on the specified RU. For another example, the first apparatus (and/or the second apparatus) can use the RU used for random access as the RU carrying the second frame. This saves overheads, without an indication from the first apparatus, and the second apparatus can alternatively determine an occasion for sending the second frame (for example, sending the second frame only when a data amount corresponding to the channel sensing information reaches a threshold), thereby further saving overheads.

The following further describes this application with reference to a scenario shown in FIG. 13 as an implementation example.

As shown in FIG. 13, descriptions are provided by using an example in which a first apparatus is an AP, a second apparatus includes a STA 3 and a STA4, and a third apparatus includes a STA 1 and a STA 2. Sensing sessions are initiated between the sensing initiator AP and the sensing responders STAs. The second apparatus is required to listen to a PPDU sent by the first apparatus to another apparatus for sensing measurement, and feeds back a measurement result to the sensing initiator AP to complete a sensing measurement procedure.

Optionally, in this example, descriptions are provided by using an example in which the second apparatus (including the STA 3 and the STA 4) performs sensing (Sensing) based on a PPDU in a process in which the first apparatus and the third apparatus transmit the PPDU for communication (Communication).

It should be noted that, although the procedure shown in FIG. 13 is described by using the example in which the sensing initiator is the AP and the sensing responder is the STAs, the procedure is not limited to the foregoing scenario. For example, a sensing initiator may be a STA, and a sensing responder may alternatively be an AP; a sensing initiator may be a STA, and a sensing responder may alternatively be a STA; or a sensing initiator may be an AP, and a sensing responder may alternatively be an AP.

In addition, for ease of description, the following embodiments are described by using an example in which the first frame is named a sensing request frame, the response frame of the first frame is named a sensing response frame, the second frame is named a sensing feedback frame, the information element that is used to carry the channel change information and included in the third frame is named a CSI change response element, and the information element that is used to carry the change information of the transmit parameter and included in the fourth frame is named a transmission setting change element. As shown above, the naming is merely an example, and the related frame may alternatively be named another name. This is not limited in this application.

### Embodiment 1

In Embodiment 1, a case in which a unique listening RA is specified in the sensing request frame is considered, that is, in a sensing measurement phase, the sensing responder STA listens to only a PPDU sent by the AP to the specified communication STA.

Optionally, in Embodiment 1, to save overheads, RA information may not be recorded or reported in subsequent measurement and feedback phases.

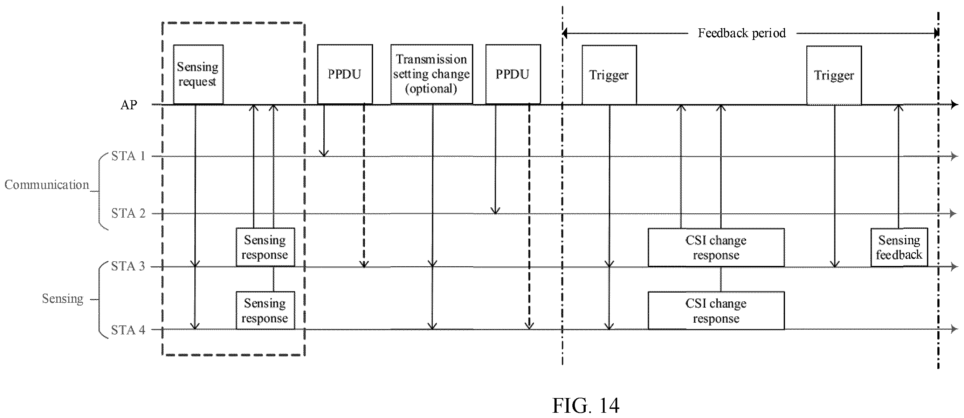

In a sensing setup phase shown by a dashed-line box in FIG. 14, the sensing initiator AP initiates sensing sessions with specified sensing responders STAs via the sensing request frame, and requests the sensing responders STAs to listen to the PPDU sent by the AP to the specified communication STAs for sensing measurement.

Optionally, for an implementation process of the sensing setup phase, refer to an implementation process of the first frame and/or the response frame of the first frame.

Optionally, information related to the sensing session needs to be specified in the sensing request frame and includes a sending frequency band of the subsequent PPDU, sensing start time and duration, and an indication indicating whether the STA needs to feed back a change of CSI information, so as to specify the unique RA for listening to the PPDU for the sensing responder STA. After listening to the sensing request frame, the specified STA replies with a sensing response frame to indicate whether to join the sensing session. After joining the session, the STA performs sensing measurement.

Optionally, because sensing is performed based on the CSI information in the communication method used in this embodiment, the change of the CSI information may be caused by a change of an environment, or may be caused by a change of parameter setting when a transmitter transmits. Therefore, impact of the change of the transmit parameter on a sensing result needs to be excluded. This application provides three solutions to this problem, and one of the three solutions may be used in each embodiment.

Method 1: It is specified that in a measurement phase, the transmitter AP does not change setting of transmit parameters such as power and precoding at the target communication station. This method fundamentally excludes a possibility of a change of transmit setting, and does not affect the subsequent sensing result.

Method 2: In a measurement phase, the transmitter AP may change setting of transmit parameters such as power and precoding at the target communication station, but needs to use related information before the change.

Optionally, the AP may notify the sensing responder STA via the related information such as the transmission setting change element and beamformed.

Method 3: In a measurement phase, the transmitter AP may change setting of transmit parameters such as power and precoding at the target communication station, without notification.

Optionally, after the AP receives a report, on the change of the CSI information, fed back by the sensing responder STA, the AP determines, by the AP, whether the change of the CSI information is caused by the change of the transmission setting of the AP.

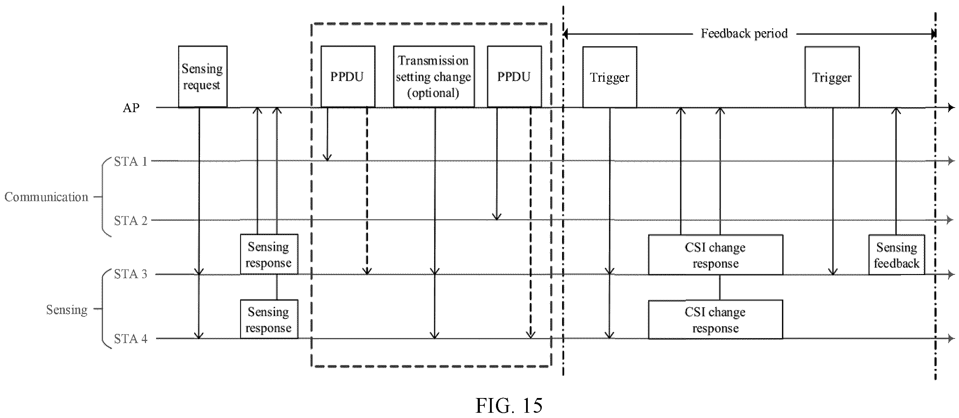

In a sensing measurement phase shown by a dashed-line box in FIG. 15, the sensing responder STA keeps listening to the PPDU sent by the AP to the specified STA, and obtains the CSI information of a link from the AP to the sensing responder STA via an HE-LTF in a physical header, as shown in FIG. 15. The sensing responder STA stores the obtained CSI information, records a sequence number (sequence number) of a corresponding communication PPDU, and compares and processes the CSI information obtained in two consecutive times. This application provides two processing methods for the obtained CSI information, and one of the two processing methods may be used in each embodiment.

Method 1: After the sensing responder STA compares the CSI information obtained in two consecutive times, if a change is less than a threshold, only the CSI information with a smallest sequence number is retained; or if a change is greater than or equal to a threashold, feedback is performed.

Optionally, in a feedback process, the sensing responder STA feeds back, in the sensing feedback frame, CSI matrices before and after the change and corresponding sequence numbers, and records sequence numbers that have been fed back, to avoid repeatedly feeding back the matrix.

Method 2: After the sensing responder STA compares the CSI information obtained in two consecutive times, if a change is less than a threshold, only the CSI information with a largest sequence number is retained; or if a change is greater than or equal to a threashold, feedback is performed.

Optionally, in a feedback process, the sensing responder STA feeds back, in the sensing feedback frame, CSI matrices before and after the change and corresponding sequence numbers, and records sequence numbers that have been fed back, to avoid repeatedly feeding back the matrix.

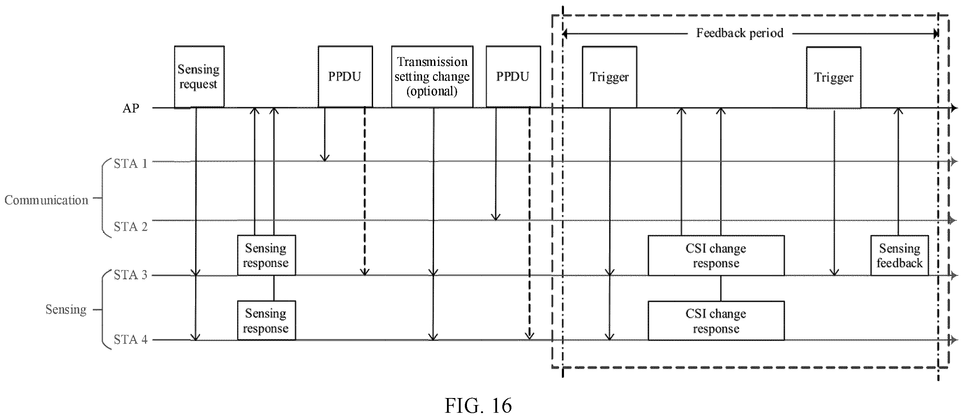

In a sensing feedback phase shown by a dashed-line box in FIG. 16, this application provides three feedback methods for feedback of the CSI information. In each embodiment, one of the three feedback methods may be used based on an actual situation.

### Method 1:

For example, the AP sends a trigger frame to start a feedback process. As shown in the dashed-line box in FIG. 16, the AP allocates an RU to each sensing responder STA in the trigger frame, and the sensing responder STA needs to feed back the CSI change response element to report whether the sensed CSI information changes.

Optionally, after receiving a report indicating that the CSI information changes, the AP sends a trigger frame to the sensing responder STA again to allocate an appropriate RU resource to feed back CSI matrices in two consecutive times. When the CSI matrix is fed back, a sequence number of the CSI matrix further needs to be indicated in the sensing feedback frame, and the sensing responder STA also needs to record a sequence number of a CSI matrix that has been fed back, to avoid repeated sending.

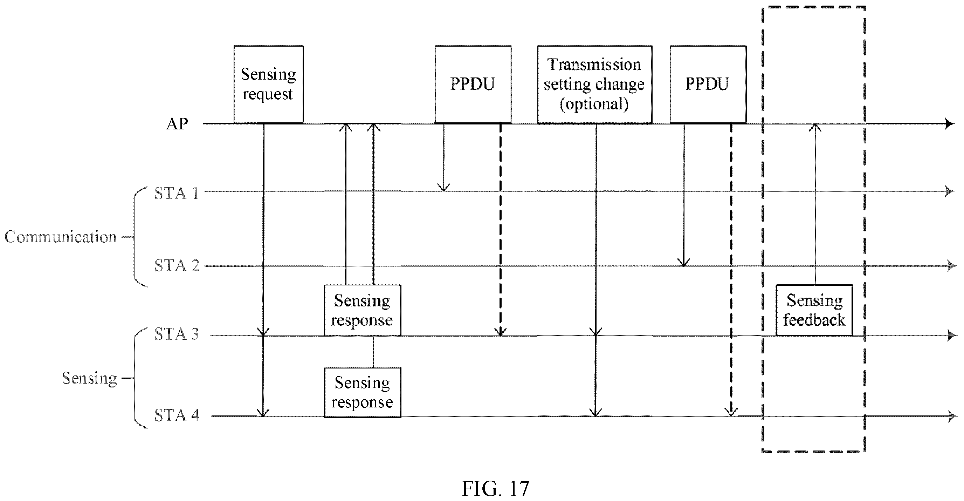

Method 2: The AP sends a trigger frame to start a feedback process. As shown in a dashed-line box in FIG. 17, the AP allocates some random access RUs in the trigger frame, and obtains, through measurement, that the sensing responder STA whose CSI information changes needs to participate in contention and feed back the change of the CSI information to the AP.

Optionally, after receiving a report indicating that the CSI information changes, the AP sends a trigger frame to the sensing responder STA again to allocate an appropriate RU resource to feed back CSI matrices in two consecutive times. When the CSI matrix is fed back, a sequence number of the CSI matrix further needs to be indicated in the sensing feedback frame, and the sensing responder STA also needs to record a sequence number of a CSI matrix that has been fed back, to avoid repeated sending.

Method 3: In a feedback phase, the AP does not need to perform triggering, and the sensing responder STA contends for channel access to actively report the channel sensing information.

Optionally, for implementation processes of the sensing measurement phase and the sensing feedback phase, refer to the foregoing implementation processes of the second frame, the first trigger frame, the third frame, the fourth frame, and/or the second trigger frame.

Optionally, descriptions are provided herein by using an example in which channel sensing information includes a CSI matrix. After the sensing responder STA measures that the CSI information changes, the sensing responder STA that needs to feed back the CSI matrix participates in channel contention, and after obtaining a channel through contention, feeds back CSI matrices in two consecutive times. After receiving the CSI matrices, the AP performs sensing analysis.

Optionally, when the sensing responder STA feeds back the CSI matrix, the sensing feedback frame further needs to indicate the sequence number of the CSI matrix, and the sensing responder STA also needs to record the sequence number of the CSI matrix that has been fed back, to avoid repeated sending.

Therefore, in Embodiment 1, in the scenario in which sensing measurement is performed based on listening to the communication PPDU, different phases of sensing are separately discussed: the setup phase, the measurement phase, and the feedback phase, and a complete and feasible sensing procedure is designed and a corresponding frame is designed. A manner of listening to the communication STA is specified for the sensing responder STA. This reduces complexity of subsequent feedback and is not easy to confuse.

In addition, in Embodiment 1, sensing measurement is completed by listening to the communication PPDU, and this is not limited to performing sensing measurement by sending an NDPA and an NDP. This manner not only meets a communication requirement, but also completes sensing measurement, thereby improving efficiency, saving overheads, and making sensing manners more flexible and diversified.

### Embodiment 2

In Embodiment 2, a case in which an RA for listening to a PPDU is not specified in the sensing request frame is considered, that is, in a sensing measurement phase, the sensing responder STA may listen to a PPDU sent by the AP. In this case, RA information needs to be recorded and reported in subsequent measurement and feedback phases, to avoid confusion.

In a sensing setup phase in Embodiment 2, the sensing initiator AP initiates a sensing session with a specified sensing responder STA via the sensing request frame, and requests the sensing responder STA to listen to PPDUs sent by the AP to all communication STAs for sensing measurement. Different from that in Embodiment 1, a unique RA for listening to the PPDU is no longer specified for the sensing responder STA in the sensing request frame, and the sensing responder STA may listen to the PPDUs sent by the AP to all the communication STAs.

Optionally, for an implementation process of the sensing setup phase, refer to an implementation process of the first frame and/or the response frame of the first frame.

In the sensing measurement phase of Embodiment 2, the sensing responder STA may listen to the PPDUs sent by the AP to all communication STAs to obtain CSI information. The sensing responder STA stores the obtained CSI information, and records a corresponding RA (receiver address) and sequence number. CSI information in two consecutive times on a same RA link is compared. If a change is small and less than a threshold, it is considered that there is no change; or if a change is greater than or equal to a threashold, a change of CSI information and corresponding RA information are fed back in the feedback phase. A manner of processing the CSI information is the same as that in Embodiment 1, and is not repeated again.

In the sensing feedback phase in Embodiment 2, different from that in Embodiment 1, when feeding back whether the CSI information changes or feeding back a CSI matrix to the AP, the sensing responder STA needs to carry changed CSI information or RA information corresponding to the CSI matrix, to avoid confusion.

Optionally, for implementation processes of the sensing measurement phase and the sensing feedback phase, refer to the foregoing implementation processes of the second frame, the first trigger frame, the third frame, the fourth frame, and/or the second trigger frame.

Therefore, in Embodiment 2, in the case in which the listening RA is not specified, a procedure that needs to be added to complete sensing based on listening to the communication PPDUs is discussed and a corresponding frame is designed. In the manner in which the sensing responder STA is not specified with listening to the communication STA, the sensing responder STA can obtain more CSI information, thereby improving sensing accuracy.

In addition, in Embodiment 2, this application breaks through a conventional limitation of specially sending a sensing signal to perform sensing measurement, and sensing measurement is completed in the manner of listening to the communication PPDU. In this manner, sensing measurement is completed while an original required communication task is completed, which can reduce overheads required for specially performing sensing measurement, and improve communication and sensing efficiency of a device.

Based on embodiments shown in FIG. 13 to FIG. 17, in this application, for the scenario in which sensing measurement is performed based on listening to the communication PPDU, a complete and feasible sensing procedure is designed, and a corresponding frame is designed. This not only meets the communication requirement, but also completes sensing measurement, thereby improving efficiency and reducing overheads. In addition, sensing measurement manners are more flexible and diversified, and this is no longer limited to a measurement manner in which the sensing signal is specially sent. It should be noted that, for implementation processes in FIG. 13 to FIG. 17, refer to descriptions in the foregoing embodiments, and corresponding technical effect is implemented. Details are not described herein again.

In any one of embodiments shown in FIG. 6 to FIG. 17, although the sensing request frame (the sensing response frame, the sensing feedback frame, or the like) uses a method for a new frame, the sensing request frame (the sensing response frame, the sensing feedback frame, or the like) may also be designed based on an original frame, for example, a beacon frame or another frame carries related information.

In any one of embodiments shown in FIG. 6 to FIG. 17, in a related PPDU transmission process, for example, the PPDU sent by the first apparatus to the third apparatus (or the PPDU sent by the AP to the STA 1), the third apparatus (or the STA 1) may reply with an acknowledgment frame to the first apparatus (or the AP) after receiving the PPDU. For brevity of description, this is omitted herein.

In any one of embodiments shown in FIG. 6 to FIG. 17, the first frame and the response frame of the first frame (or referred to as the sensing request frame and the sensing response frame) may be used to implement a process in the sensing procedure, for example, may be used to implement "A: Sensing session setup (Sensing session setup)" in the five steps in the sensing procedure; of for another example, may be used to implement "B: Measurement setup (Measurement setup)" in the five steps in the sensing procedure.

In any embodiment shown in FIG. 6 to FIG. 17, the second frame (or referred to as the sensing feedback frame) may be used to implement a process in the sensing procedure, for example, may be used to implement the reporting phase (reporting phase) in "C: Measurement instance (Measurement instance)" in the five steps in the sensing procedure.

In any one of embodiments shown in FIG. 6 to FIG. 17, a process in which the second apparatus (or the STA 3 or the STA 4) receives the PPDU may correspond to the sounding (sounding) process in the sensing procedure.

The foregoing describes this application from the perspective of methods, and the following further describes this application from the perspective of apparatuses.

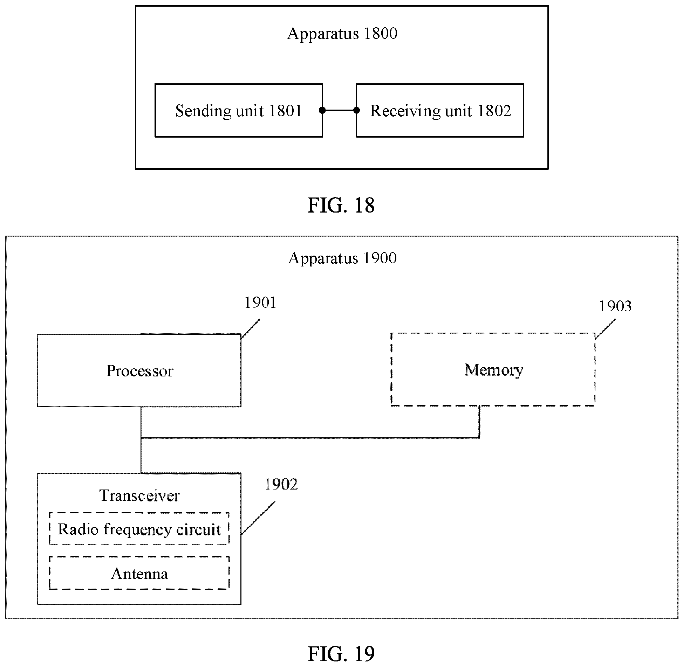

FIG. 18 is a schematic diagram of an apparatus 1800 according to an embodiment of this application. The apparatus 1800 includes a sending unit 1801 and a receiving unit 1802.

The apparatus 1800 may be specifically applied to a WLAN system. The apparatus may be a WLAN device, or the apparatus may be some components in a WLAN device. The WLAN device may include a STA or an AP, and the some components in the WLAN device may include a processor, a chip, a chip system, or the like.

In an implementation, the apparatus is configured to implement the communication method corresponding to the first apparatus in any one of the foregoing embodiments. Correspondingly, the sending unit 1801 and the receiving unit 1802 are configured to perform the following process:

The sending unit 1801 is configured to send a first frame to a second apparatus, where the first frame is used to request channel sensing.

The receiving unit 1802 is configured to receive a second frame from the second apparatus, where the second frame includes channel sensing information between the first apparatus and the second apparatus, the channel sensing information is determined based on a part of or all of n PPDUs, the n PPDUs are PPDUs sent by the first apparatus, and n is greater than or equal to 1.

In a possible implementation, at least one of the n PPDUs is used for communication between the first apparatus and a third apparatus.

In a possible implementation, the channel sensing information includes at least one of the following:
channel state information CSI, a multiple input multiple output MIMO parameter of CSI, an identifier of a PPDU corresponding to CSI, or address information of the part of or all of the PPDUs.

In a possible implementation,
the part of or all of the PPDUs include m PPDUs, m is greater than or equal to 1, and m is less than or equal to n; and
the m PPDUs included in the part of or all of the PPDUs are respectively located in m PPDU sets of the n PPDUs, the m PPDU sets include a first PPDU set and a second PPDU set that are adjacent to each other, and change information between CSI corresponding to a PPDU in the first PPDU set and CSI corresponding to a PPDU in the second PPDU set is greater than a first threshold.

In a possible implementation, that change information between CSI corresponding to a PPDU in the first PPDU set and CSI corresponding to a PPDU in the second PPDU set is greater than a first threshold includes:
change information between CSI corresponding to any PPDU in the first PPDU set and CSI corresponding to any PPDU in the second PPDU set is greater than the first threshold; or
change information between CSI corresponding to one PPDU in the first PPDU set and CSI corresponding to one PPDU in the second PPDU set is greater than the first threshold.

In a possible implementation,
change information between CSI corresponding to at least two PPDUs included in the first PPDU set is less than a second threshold.

In a possible implementation, the n PPDUs meet at least one of the following:
a receiver address field of the at least one of the n PPDUs indicates the third apparatus;
a receiver address field of the at least one of the n PPDUs indicates the second apparatus; or
the at least one of the n PPDUs is a PPDU sent through broadcast.

In a possible implementation, the first frame includes at least one of the following:
start moment information of channel sensing, duration information of channel sensing, frequency band information of channel sensing, indication information indicating whether to feed back a change of CSI, or address information of a PPDU for channel sensing.

In a possible implementation,
the receiving unit 1802 is further configured to receive a response frame of the first frame from the second apparatus, where
the response frame of the first frame indicates whether the second apparatus agrees to channel sensing; or
the response frame of the first frame indicates whether the second apparatus receives the first frame.

In a possible implementation,
both the first frame and the response frame of the first frame are management frames; and
a value of a subtype field in a frame control field in the first frame is 0111, and a value of a subtype field in the response frame of the first frame is 1111; or
a value of a subtype field in a frame control field in the first frame is 1111, and a value of a subtype field in the response frame of the first frame is 0111.

In a possible implementation,
both the first frame and the response frame of the first frame are action frames; and
a value of a public action field in the first frame is any one of 34 to 255, and a value of a public action field in the response frame of the first frame is any one of 34 to 255.

In a possible implementation,
the receiving unit 1802 is further configured to receive a third frame from the second apparatus, where the third frame includes channel change information between the first apparatus and the second apparatus, and the channel change information is determined based on the n PPDUs.

In a possible implementation,
the sending unit 1801 is further configured to send a first trigger frame to the second apparatus, where the first trigger frame includes resource unit RU information carrying the channel change information, and
the RU information carrying the channel change information indicates an RU corresponding to the second apparatus, or
the RU information carrying the channel change information indicates an RU for random access.

In a possible implementation, the third frame is carried in an RU for contention-based channel access.

In a possible implementation, the third frame further includes at least one of the following:
location change information of the second apparatus, or
address information of the part of or all of the n PPDUs.

In a possible implementation,
the sending unit 1801 is further configured to send a second trigger frame to the second apparatus, where the second trigger frame includes RU information carrying channel sensing information, and
the RU information carrying the channel sensing information indicates an RU corresponding to the second apparatus, or
the RU information carrying the channel sensing information indicates an RU for contention access.

In a possible implementation, the second frame is carried in an RU for contention-based channel access.

In a possible implementation,
the sending unit 1801 is further configured to send a fourth frame to the second apparatus, where the fourth frame includes at least one of the following fields:
a first field, indicating whether beamforming or precoding exists,
a second field, indicating whether to change a transmit power,
a third field, indicating whether to change beamforming-precoding,
a fourth field, indicating a beamforming matrix-a precoding matrix,
a fifth field, indicating whether a transmit power changes, or
a sixth field, indicating a transmit power value.

In an implementation, the apparatus is configured to implement the communication method corresponding to the second apparatus in any one of the foregoing embodiments. Correspondingly, the sending unit 1801 and the receiving unit 1802 are configured to perform the following process.

The receiving unit 1802 is configured to receive a first frame from a first apparatus, where the first frame is used to request channel sensing.

The sending unit 1801 is configured to send a second frame to the first apparatus, where the second frame includes channel sensing information between the first apparatus and the second apparatus, the channel sensing information is determined based on a part of or all of n PPDUs, the n PPDUs are PPDUs sent by the first apparatus, and n is greater than or equal to 1.

In a possible implementation, at least one of the n PPDUs is used for communication between the first apparatus and a third apparatus.

In a possible implementation, the channel sensing information includes at least one of the following:
channel state information CSI, a multiple input multiple output MIMO parameter of CSI, an identifier of a PPDU corresponding to CSI, or address information of the part of or all of the PPDUs.

In a possible implementation,
the part of or all of the PPDUs include m PPDUs, m is greater than or equal to 1, and m is less than or equal to n; and
the m PPDUs included in the part of or all of the PPDUs are respectively located in m PPDU sets of the n PPDUs, the m PPDU sets include a first PPDU set and a second PPDU set that are adjacent to each other, and change information between CSI corresponding to a PPDU in the first PPDU set and CSI corresponding to a PPDU in the second PPDU set is greater than a first threshold.

In a possible implementation, that change information between CSI corresponding to a PPDU in the first PPDU set and CSI corresponding to a PPDU in the second PPDU set is greater than a first threshold includes:
change information between CSI corresponding to any PPDU in the first PPDU set and CSI corresponding to any PPDU in the second PPDU set is greater than the first threshold; or
change information between CSI corresponding to one PPDU in the first PPDU set and CSI corresponding to one PPDU in the second PPDU set is greater than the first threshold.

In a possible implementation,
change information between CSI corresponding to at least two PPDUs included in the first PPDU set is less than a second threshold.

In a possible implementation, the n PPDUs meet at least one of the following:
a receiver address field of the at least one of the n PPDUs indicates the third apparatus;
a receiver address field of the at least one of the n PPDUs indicates the second apparatus; or
the at least one of the n PPDUs is a PPDU sent through broadcast.

In a possible implementation, the first frame includes at least one of the following:
start moment information of channel sensing, duration information of channel sensing, frequency band information of channel sensing, indication information indicating whether to feed back a change of CSI, or address information of a PPDU for channel sensing.

In a possible implementation,
the sending unit 1801 is further configured to send a response frame of the first frame to the first apparatus, where
the response frame of the first frame indicates whether the second apparatus agrees to channel sensing; or
the response frame of the first frame indicates whether the second apparatus receives the first frame.

In a possible implementation,
both the first frame and the response frame of the first frame are management frames; and
a value of a subtype field in a frame control field in the first frame is 0111, and a value of a subtype field in the response frame of the first frame is 1111; or
a value of a subtype field in a frame control field in the first frame is 1111, and a value of a subtype field in the response frame of the first frame is 0111.

In a possible implementation,
both the first frame and the response frame of the first frame are action frames; and
a value of a public action field in the first frame is any one of 34 to 255, and a value of a public action field in the response frame of the first frame is any one of 34 to 255.

In a possible implementation,
the sending unit 1801 is further configured to send a third frame to the second apparatus, where the third frame includes channel change information between the first apparatus and the second apparatus, and the channel change information is determined based on the n PPDUs.

In a possible implementation,
the receiving unit 1802 is further configured to receive a first trigger frame from the first apparatus, where the first trigger frame includes resource unit RU information carrying the channel change information, and
the RU information carrying the channel change information indicates an RU corresponding to the second apparatus, or
the RU information carrying the channel change information indicates an RU for random access.

In a possible implementation, the third frame is carried in an RU for contention-based channel access.

In a possible implementation of the fourth aspect, the third frame further includes at least one of the following:
location change information of the second apparatus, or
address information of the part of or all of the n PPDUs.

In a possible implementation,
the receiving unit 1802 is further configured to receive a second trigger frame from the first apparatus, where the second trigger frame includes RU information carrying channel sensing information, and
the RU information carrying the channel sensing information indicates an RU corresponding to the second apparatus, or
the RU information carrying the channel sensing information indicates an RU for contention access.

In a possible implementation, the second frame is carried in an RU for contention-based channel access.

In a possible implementation,
the receiving unit 1802 is further configured to receive a fourth frame from the first apparatus, where the fourth frame includes at least one of the following fields:
a first field, indicating whether beamforming or precoding exists,
a second field, indicating whether to change a transmit power,
a third field, indicating whether to change beamforming-precoding,
a fourth field, indicating a beamforming matrix-a precoding matrix,
a fifth field, indicating whether a transmit power changes, or
a sixth field, indicating a transmit power value.

It should be noted that the apparatus 1800 may alternatively be configured to perform the foregoing other embodiments and achieve corresponding beneficial effect. For details, refer to the descriptions in the foregoing embodiments. Details are not described herein again.

FIG. 19 is a schematic diagram of a structure of an apparatus 1900 according to an embodiment of this application. The apparatus 1900 includes a processor 1901 and a transceiver 1902.

The apparatus 1900 may be a radio frame sending apparatus, a radio frame receiving apparatus, or a chip in a radio frame sending apparatus or a radio frame receiving apparatus.

FIG. 19 shows only main components in the apparatus 1900. In addition to the processor 1901 and the transceiver 1902, the apparatus may further include a memory 1903 and an input/output apparatus (not shown in the figure).

The processor 1901 is mainly configured to process a communication protocol and communication data, control the entire apparatus, execute a software program, and process data of the software program. The memory 1903 is mainly configured to store the software program and the data. The transceiver 1902 may include a radio frequency circuit and an antenna. The radio frequency circuit is mainly configured to: perform conversion between a baseband signal and a radio frequency signal, and process the radio frequency signal. The antenna is mainly configured to receive and send radio frequency signals in a form of an electromagnetic wave. The input/output apparatus, such as a touchscreen, a display, or a keyboard, is mainly configured to: receive data input by a user and output data to the user.

The processor 1901, the transceiver 1902, and the memory 1903 may be connected through a communication bus.

After the apparatus is powered on, the processor 1901 can read the software program in the memory 1903, interpret and execute instructions in the software program, and process data of the software program. When data needs to be sent in a wireless manner, the processor 1901 performs baseband processing on the to-be-sent data, and then outputs a baseband signal to the radio frequency circuit. The radio frequency circuit performs radio frequency processing on the baseband signal, and then sends a radio frequency signal in an electromagnetic wave form through the antenna. When data is sent to the apparatus, the radio frequency circuit receives a radio frequency signal through the antenna, converts the radio frequency signal into a baseband signal, and outputs the baseband signal to the processor 1901; and the processor 1901 converts the baseband signal into data and processes the data.

In any one of the foregoing designs, the processor 1901 may include a communication interface for implementing receiving and sending functions. For example, the communication interface may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to perform signal transmission or transfer.

In any one of the foregoing designs, the processor 1901 may store instructions. The instructions may be a computer program. The computer program is run on the processor 1901, so that the apparatus 1900 can perform the method described in any one of the method embodiments. The computer program may be built into the processor 1901. In this case, the processor 1901 may be implemented by hardware.

In an implementation, the apparatus 1900 may include a circuit, and the circuit may implement a sending, receiving, or communication function in any one of the method embodiments. The processor and the communication interface described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the communication interface may be manufactured using various IC technologies, for example, a complementary metal-oxide-semiconductor (complementary metal-oxide-semiconductor, CMOS), an N-type metal-oxide-semiconductor (NMetal-oxide-semiconductor, NMOS), a P-channel metal-oxide-semiconductor (positive channel metal-oxide-semiconductor, PMOS), a bipolar junction transistor (bipolar junction transistor, BJT), a bipolar CMOS (BiCMOS), silicon germanium (SiGe), and gallium arsenide (GaAs).

In another implementation, the radio frequency circuit and the antenna may be disposed independent of the processor that performs baseband processing. For example, in a distributed scenario, the radio frequency circuit and the antenna may be disposed remotely and independent of the apparatus.

The apparatus may be an independent device, or may be a part of a larger device. For example, the apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, for example, a modem (Modem);
(4) a module that can be embedded in another device;
(5) a receiver, an intelligent terminal, a wireless device, a handset, a mobile unit, a vehicle-mounted device, a cloud device, an artificial intelligence device, or the like; or
(6) another device.

In addition, the processor 1901 may be configured to perform, for example but not limited to, baseband related processing; and the transceiver 1902 may be configured to perform, for example but not limited to, radio frequency receiving and sending. The foregoing components may be separately disposed on chips that are independent of each other, or at least some or all of the components may be disposed on a same chip. For example, the processor may be divided into an analog baseband processor and a digital baseband processor. The analog baseband processor and the transceiver may be integrated on a same chip, and the digital baseband processor may be disposed on an independent chip. With the continuous development of integrated circuit technologies, more and more components may be integrated on a same chip. For example, the digital baseband processor may be integrated on a same chip with a plurality of application processors (for example, but not limited to a geometric processor and a multimedia processor). The chip may be referred to as a system-on-a-chip (system-on-a-chip). Whether components are independently disposed on different chips or are integrated and disposed on one or more chips usually depends on specific requirements of a product design. This embodiment of this application imposes no limitation on specific implementations of the foregoing components.

An embodiment of this application further provides a computer-readable storage medium. The computer-readable storage medium stores computer program code. When the foregoing processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides an apparatus. The apparatus may exist in a product form of a chip. A structure of the apparatus includes a processor and an interface circuit. The processor is configured to perform communication with another apparatus through the interface circuit, to enable the apparatus to perform the method in any one of the foregoing embodiments.

An embodiment of this application further provides a WLAN communication system, including the first apparatus and the second apparatus in any one of the foregoing embodiments.

Optionally, the WLAN communication system further includes another apparatus, for example, a third apparatus.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another place. The storage medium may be any available medium accessible to a general-purpose or a dedicated computer.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

The objectives, technical solutions, and beneficial effect of this application are further described in detail in the foregoing specific implementations. It should be understood that the foregoing descriptions are merely specific implementations of this application, but are not intended to limit the protection scope of this application. Any modification, equivalent replacement, or improvement made based on technical solutions of this application shall fall within the protection scope of this application.

## Claims

1. A communication method, comprising:
sending, by a first apparatus, a first frame to a second apparatus, wherein the first frame is used to request channel sensing; and
receiving, by the first apparatus, a second frame from the second apparatus, wherein the second frame comprises channel sensing information between the first apparatus and the second apparatus, the channel sensing information is determined based on a part of or all of n physical layer protocol data units PPDUs, the n PPDUs are PPDUs sent by the first apparatus, and n is greater than or equal to 1.

2. A communication method, comprising:
receiving, by a second apparatus, a first frame from a first apparatus, wherein the first frame is used to request channel sensing; and
sending, by the second apparatus, a second frame to the first apparatus, wherein the second frame comprises channel sensing information between the first apparatus and the second apparatus, the channel sensing information is determined based on a part of or all of n PPDUs, the n PPDUs are PPDUs sent by the first apparatus, and n is greater than or equal to 1.

3. The method according to claim 1 or 2, wherein at least one of the n PPDUs is used for communication between the first apparatus and a third apparatus.

4. The method according to any one of claims 1 to 3, wherein the channel sensing information comprises at least one of the following:
channel state information CSI, a multiple input multiple output MIMO parameter of CSI, an identifier of a PPDU corresponding to CSI, or address information of the part of or all of the PPDUs.

5. The method according to any one of claims 1 to 4, wherein
the part of or all of the PPDUs comprise m PPDUs, m is greater than or equal to 1, and m is less than or equal to n; and
the m PPDUs comprised in the part of or all of the PPDUs are respectively located in m PPDU sets of the n PPDUs, the m PPDU sets comprise a first PPDU set and a second PPDU set that are adjacent to each other, and change information between CSI corresponding to a PPDU in the first PPDU set and CSI corresponding to a PPDU in the second PPDU set is greater than a first threshold.

6. The method according to claim 5, wherein that change information between CSI corresponding to a PPDU in the first PPDU set and CSI corresponding to a PPDU in the second PPDU set is greater than a first threshold comprises:
change information between CSI corresponding to any PPDU in the first PPDU set and CSI corresponding to any PPDU in the second PPDU set is greater than the first threshold; or
change information between CSI corresponding to one PPDU in the first PPDU set and CSI corresponding to one PPDU in the second PPDU set is greater than the first threshold.

7. The method according to claim 5 or 6, wherein
change information between CSI corresponding to at least two PPDUs comprised in the first PPDU set is less than a second threshold.

8. The method according to any one of claims 1 to 7, wherein the n PPDUs meet at least one of the following:
a receiver address field of the at least one of the n PPDUs indicates the third apparatus;
a receiver address field of the at least one of the n PPDUs indicates the second apparatus; or
the at least one of the n PPDUs is a PPDU sent through broadcast.

9. The method according to any one of claims 1 to 8, wherein the first frame comprises at least one of the following:
start moment information of channel sensing, duration information of channel sensing, frequency band information of channel sensing, indication information indicating whether to feed back a change of CSI, or address information of a PPDU for channel sensing.

10. The method according to any one of claims 1 and 3 to 9, wherein before the receiving, by the first apparatus, a second frame from the second apparatus, the method further comprises:
receiving, by the first apparatus, a response frame of the first frame from the second apparatus, wherein
the response frame of the first frame indicates whether the second apparatus agrees to channel sensing; or
the response frame of the first frame indicates whether the second apparatus receives the first frame.

11. The method according to any one of claims 2 to 9, wherein before the sending, by the second apparatus, a second frame to the first apparatus, the method further comprises:
sending, by the second apparatus, a response frame of the first frame to the first apparatus, wherein
the response frame of the first frame indicates whether the second apparatus agrees to channel sensing; or
the response frame of the first frame indicates whether the second apparatus receives the first frame.

12. The method according to claim 10 or 11, wherein
both the first frame and the response frame of the first frame are management frames; and
a value of a subtype field in a frame control field in the first frame is 0111, and a value of a subtype field in the response frame of the first frame is 1111; or
a value of a subtype field in a frame control field in the first frame is 1111, and a value of a subtype field in the response frame of the first frame is 0111.

13. The method according to claim 10 or 11, wherein
both the first frame and the response frame of the first frame are action frames; and
a value of a public action field in the first frame is any one of 34 to 255, and a value of a public action field in the response frame of the first frame is any one of 34 to 255.

14. The method according to any one of claims 1, 3 to 10, and 12 and 13, wherein after the sending, by a first apparatus, a first frame to a second apparatus, the method further comprises:
receiving, by the first apparatus, a third frame from the second apparatus, wherein the third frame comprises channel change information between the first apparatus and the second apparatus, and the channel change information is determined based on the n PPDUs.

15. The method according to claim 14, wherein before the receiving, by the first apparatus, a third frame from the second apparatus, the method further comprises:
sending, by the first apparatus, a first trigger frame to the second apparatus, wherein the first trigger frame comprises resource unit RU information carrying the channel change information, and
the RU information carrying the channel change information indicates an RU corresponding to the second apparatus, or
the RU information carrying the channel change information indicates an RU for random access.

16. The method according to any one of claims 2 to 9, and 11 to 13, wherein after the receiving, by a second apparatus, a first frame from the second apparatus, the method further comprises:
sending, by the second apparatus, a third frame to the second apparatus, wherein the third frame comprises channel change information between the first apparatus and the second apparatus, and the channel change information is determined based on the n PPDUs.

17. The method according to claim 16, wherein before the sending, by the second apparatus, a third frame to the second apparatus, the method further comprises:
receiving, by the second apparatus, a first trigger frame from the first apparatus, wherein the first trigger frame comprises resource unit RU information carrying the channel change information, and
the RU information carrying the channel change information indicates an RU corresponding to the second apparatus, or
the RU information carrying the channel change information indicates an RU for random access.

18. The method according to any one of claims 14 to 17, wherein the third frame is carried in an RU for contention-based channel access.

19. The method according to any one of claims 14 to 18, wherein the third frame further comprises at least one of the following:
location change information of the second apparatus, or
address information of the part of or all of the n PPDUs.

20. The method according to any one of claims 1, 3 to 10, 12 to 15, and 18 and 19, wherein before the receiving, by the first apparatus, a second frame from the second apparatus, the method further comprises:
sending, by the first apparatus, a second trigger frame to the second apparatus, wherein the second trigger frame comprises RU information carrying channel sensing information, and
the RU information carrying the channel sensing information indicates an RU corresponding to the second apparatus, or
the RU information carrying the channel sensing information indicates an RU for contention access.

21. The method according to any one of claims 2 to 9, 11 to 13, and 16 to 19, wherein before the sending, by the second apparatus, a second frame to the first apparatus, the method further comprises:
receiving, by the second apparatus, a second trigger frame from the first apparatus, wherein the second trigger frame comprises RU information carrying channel sensing information, and
the RU information carrying the channel sensing information indicates an RU corresponding to the second apparatus, or
the RU information carrying the channel sensing information indicates an RU for contention access.

22. The method according to claim 20 or 21, wherein the second frame is carried in an RU for contention-based channel access.

23. The method according to any one of claims 1, 3 to 10, 12 to 15, 18 and 19, and 20 to 22, wherein before the receiving, by the first apparatus, a second frame from the second apparatus, the method further comprises:
sending, by the first apparatus, a fourth frame to the second apparatus, wherein the fourth frame comprises at least one of the following fields:
a first field, indicating whether beamforming or precoding exists,
a second field, indicating whether to change a transmit power,
a third field, indicating whether to change beamforming-precoding,
a fourth field, indicating a beamforming matrix-a precoding matrix,
a fifth field, indicating whether a transmit power changes, or
a sixth field, indicating a transmit power value.

24. The method according to any one of claims 2 to 9, 11 to 13, 16 to 19, and 21 and 22, wherein before the sending, by the second apparatus, a second frame to the first apparatus, the method further comprises:
receiving, by the second apparatus, a fourth frame from the first apparatus, wherein the fourth frame comprises at least one of the following fields:
a first field, indicating whether beamforming or precoding exists,
a second field, indicating whether to change a transmit power,
a third field, indicating whether to change beamforming-precoding,
a fourth field, indicating a beamforming matrix-a precoding matrix,
a fifth field, indicating whether a transmit power changes, or
a sixth field, indicating a transmit power value.

25. An apparatus, comprising a processor, wherein the processor is configured to perform the method according to any one of claims 1, 3 to 10, 12 to 15, 18 and 19, 20, and 22 and 23.

26. An apparatus, comprising a processor, wherein the processor is configured to perform the method according to any one of claims 2 to 9, 11 to 13, 16 to 19, 21 and 22, and 24.

27. A computer-readable storage medium, wherein the computer-readable storage medium stores program instructions, and when the program instructions are run on a computer, the computer is enabled to perform the method according to any one of claims 1 to 24.

28. A computer program product comprising program instructions, wherein when the program instructions are run on a computer, the computer is enabled to perform the method according to any one of claims 1 to 24.

29. A communication system, comprising:
the apparatus according to claim 25, and/ or
the apparatus according to claim 26.
